# EUROPEAN PATENT APPLICATION

(11) **EP 0 976 431 A1**
(43) Date of publication of application: **02.02.2000**
(21) Application number: 99903928.2
(22) Date of filing: 16.02.1999
(51) Int. Cl.: A63F 9/22, G09B 5/00, G06F 15/02

(54) **PORTABLE ELECTRONIC DEVICE AND ENTERTAINMENT SYSTEM**

(30) Priority: 16.02.1998 JP 5008598
(71) Applicant: Sony Computer Entertainment Inc., Tokyo 107-0052 (JP)
(72) Inventor: Tanaka, Makoto, Sony Com. Entertainment Inc., Tokyo 107-0052 (JP); YUTAKA, Teiji, Sony Com. Entertainment Inc., Tokyo 107-0052 (JP); TANAKA, Masayoshi, Sony Com. Entertainment Inc., Tokyo 107-0052 (JP); OHBA, Akio, Sony Com. Entertainment Inc., Tokyo 107-0052 (JP); Suzuoki, Masakazu, Sony Com. Entertainment Inc., Tokyo 107-0052 (JP)
(74) Representative: Hedley, Nicholas James Matthew
(86) International application number: JP9900668
(87) International publication number: WO9940983

(57) **Abstract**

A portable electronic device has a connector 42 for being connected to a master on which a video game is run, control means 41, which has a program memory 41a for storing a game program that has been downloaded from the master, for controlling execution of the program, display means 44 for displaying information in accordance with the program executed, input means 43 for operating the program, and a battery 49 for supplying power to each of these means, wherein the portable electronic device executes the game, on the basis of the program downloaded from the master, in a state in which it is cut off from supply of power from the master.

## Description

### Technical Field

This invention relates to a portable electronic device used as an auxiliary storage device such as a memory card inserted into the master unit of information equipment, as well as an entertainment system such as a video game station having a function for storing game data or the like in an auxiliary storage device.

### Background Art

A portable electronic device or slave serving as an auxiliary storage device such as a conventional memory card used upon being inserted into the master of information equipment such as a video game machine is equipped with an interface for making a connection to the console (master) of the information equipment and a non-volatile storage element for storing data.

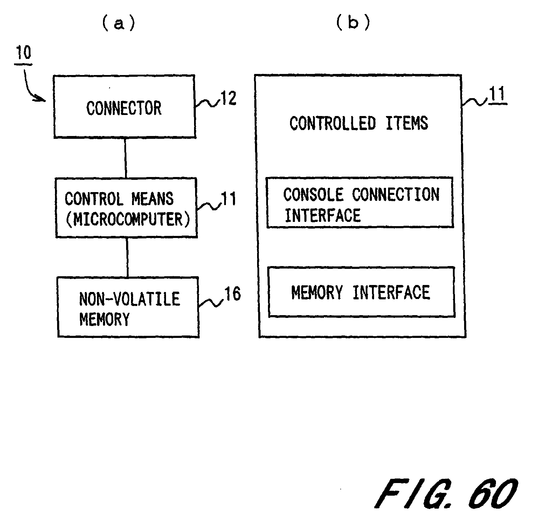

Fig. 60(a) illustrates an example of the arrangement of the principal components of a memory card, which is an example of such a portable electronic device according to the prior art. A memory card according to the prior art has control means 11 for controlling the operation of the memory card, a connector 12 for making a connection to a terminal provided in a slot of information equipment or the like, and a non-volatile memory 16 for storing data. The connector 12 and the non-volatile memory 16 are connected to the control means 11.

The control means 11 is constituted by a microcomputer, by way of example. A flash memory such as an EEPROM, for example, is used as the non-volatile memory 16. There are also instances where the interface for the connection to the information equipment or the like employs a microcomputer as control means for interpreting protocols.

Fig. 60(b) illustrates the items controlled by the control means 11 of the conventional memory card 10.

As illustrated, the memory card merely has a console connection interface for connection to the console of the information equipment or the like, and a memory interface for input and output of data to and from the non-volatile memory.

Further, the conventional video game station such as a TV game station for home use has a function for storing game data and the like in an auxiliary storage device. The above-mentioned video card is used also as an auxiliary storage device of such a video game station.

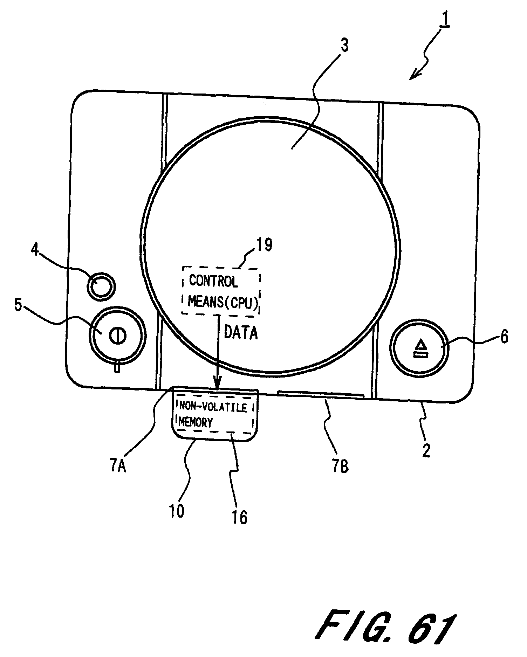

Fig. 61 illustrates an example of a conventional video game station that uses a memory card as an auxiliary storage device. This conventional video game station 1 has a console 2 accommodated within a substantially quadrangular case and is constituted by a centrally provided disk mounting unit 3 in which is mounted an optical disk serving as a recording medium on which the application program of a video game has been recorded, a reset switch 4 for resetting the game at will, a power-supply switch 5, a disk operating switch 6 manipulated for mounting the optical disk, and two slots 7A and 7B, by way of example.

The memory card 10 used as an auxiliary storage device is inserted into the slots 7A, 7B so that the results of a game, for example, that has been run on the video game station 1, are sent from control means (CPU) 19 and written to the non-volatile memory 16. An arrangement may also be adopted in which a plurality of control devices (controllers) (not shown) are connected to the slots 7A, 7B, thereby enabling a plurality of users to play competitive games against one another at the same time.

Consideration has been given to providing a slave, which is connected utilizing the memory-card slot of a video game station or the like serving as the master, not only with the storage function of an auxiliary storage device but also with a function for executing programs such as games. Such a slave can also be used as a portable electronic device as is, and by making it easy to communicate with other equipment, a wider range of applications can be achieved. This in turn can stimulate new demand.

The present invention, which has been devised in view of these circumstances, has as its object to provide a portable electronic device and an entertainment system, wherein the portable electronic device is capable of being connected to a master, can be used even as a stand-alone slave and readily communicates with other items of equipment.

### Disclosure of Invention

A portable electronic device according to the present invention is equipped with an interface for making a connection to a master having a program executing function, the portable electronic device comprising program storage means for storing a program, control means for controlling execution of the program, display means for displaying information in accordance with the program executed, operation input means for operating the program, and power supply means for supplying power to each of the above-mentioned means, wherein information accompanying execution of a program by the master is transferred and the program that has been stored in the program storage means is executed by the control means on the basis of the information transferred.

Accordingly, the inventive portable electronic device is provided not only with the memory card function of the kind used heretofore and with the function of the conventional memory card used as an auxiliary storage device of information equipment or the like but also with operation input means for operating a stored program, display means for displaying various information in accordance with the program, and a battery or the like for supplying each of these units with power. As a result, it is possible to provide a memory card that not only stores data but also executes a downloaded application program independently and performs a cooperative operation while exchanging the results of program execution with other information equipment. Furthermore, in accordance with the present invention, a memory card capable of downloading and independently executing an application program and of exchanging the results of program execution with other information equipment is used as an auxiliary storage device in a video game station having a function for storing game data or the like in the auxiliary storage device. As a result, it is possible to provide a video game station that performs cooperative operation such as implementing a game upon incorporating the results of a game played independently using the memory card.

Further, an entertainment system according to the present invention comprises a master having a program executing function and a slave equipped with an interface for making a connection to the master, wherein the master has control means for transferring information accompanying execution of the program to the slave and for reading in information from the slave, and the slave has program storage means for storing a program, control means for controlling execution of the program, display means for displaying information in accordance with the program executed, operation input means for operating the program, and power supply means for supplying power to each of the above-mentioned means.

Accordingly, the entertainment system does not merely have the conventional relationship between a master and a slave serving as a memory card but is constituted by a master and a slave that has operation input means for operating a stored program, display means for displaying various information in accordance with the program, and a battery or the like for supplying each of these units with power. As a result, it is possible not only to store data but also to independently execute a downloaded application program and perform cooperative operation while the results of program execution are exchanged with other information equipment. Further, in accordance with the present invention, a memory card capable of downloading an application program and executing the program independently and of exchanging the results of program execution with other information equipment is used as device a slave with an auxiliary storage. As a result, it is possible to perform cooperative operation such as implementing a game upon incorporating the results of a game played independently using the memory card.

### Brief Description of Drawings

Fig. 1 is a plan view illustrating the appearance of a video game station serving as a master in which a portable electronic device is used as a slave according to an embodiment of the present invention;
Fig. 2 is a back view showing the appearance of slots in the video game station serving as a master;
Fig. 3 is an external perspective view showing the appearance of the video game station serving as a master;
Fig. 4 is a block diagram illustrating a specific example of the arrangement of the principal components of the video game station serving as a master;
Fig. 5 is a plan view illustrating the appearance of an embodiment of portable electronic device according to the present invention;
Fig. 6 is a perspective view showing the appearance of the embodiment of portable electronic device according to the present invention;
Fig. 7 is a perspective view showing a cover member in the opened state in the embodiment of the portable electronic device according to the present invention;
Fig. 8 is a front view showing the appearance of an embodiment of the portable electronic device according to the present invention;
Fig. 9 is a block diagram showing an example of the arrangement of the principal components of the embodiment of the portable electronic device according to the present invention;
Fig. 10 is a diagram useful in describing a wireless communication function of the embodiment of the portable electronic device according to the present invention;
Fig. 11 is a diagram useful in describing cooperative operation between a slave which is an embodiment of the portable electronic device according to the present invention and the console of the video game station serving as the master;
Fig. 12 is a diagram showing the flow of program data downloaded from the video game station console (master) to the portable electronic device (slave);
Fig. 13 is a flowchart showing the download procedure of Fig. 12;
Fig. 14 is a diagram showing another flow of program data downloaded from the video game station console (master) to the portable electronic device (slave);
Fig. 15 is a flowchart showing the procedure of the download depicted in Fig. 14;
Fig. 16 is a flowchart illustrating a series of steps executed on the master side in a case where a subsequent lesson is created based upon the results of a review test;
Fig. 17 is a flowchart illustrating a series of steps executed on the slave side in a case where a subsequent lesson is created based upon the results of a review test;
Fig. 18 is a flowchart illustrating a series of steps executed on the master side in a case where the results of a review test are merely totalized;
Fig. 19 is a flowchart illustrating a series of steps executed on the slave side in a case where the results of a review test are merely totalized;
Fig. 20 is a flowchart illustrating a series of steps executed on the master side in a case where one day's problems are sent without giving lessons;
Fig. 21 is a flowchart illustrating a series of steps executed on the slave side in a case where one day's problems are sent without giving lessons;
Fig. 22 is a flowchart illustrating a series of steps executed on the master side in a case where a subsequent lesson is created based upon the results of a review test and one day's problems are sent to the slave without giving lessons;
Fig. 23 is a flowchart illustrating a series of steps executed on the slave side in a case where a subsequent lesson is created based upon the results of a review test and one day's problems are sent to the slave without giving lessons;
Fig. 24 is a diagram showing a specific example of a portable map displayed on a screen;
Fig. 25 is a diagram showing a specific example of a display indicating the position of a post office on the portable map;
Fig. 26 is a flowchart illustrating a series of steps executed on the master side in connection with a portable map;
Fig. 27 is a flowchart illustrating a series of steps executed on the slave side in connection with a portable map;
Fig. 28 is a flowchart illustrating a series of steps executed on a slave transmitting side and slave receiving side in connection with a portable map;
Fig. 29 is a flowchart showing a series of steps executed by the master in regard to selective transfer on a per-slave basis;
Fig. 30 is a flowchart showing a series of steps executed by the slave in regard to selective transfer on a per-slave basis;
Fig. 31 is a flowchart showing a series of steps executed by the master in regard to an operation relating to transfer of a high score;
Fig. 32 is a flowchart showing a series of steps executed by the slave in regard to an operation relating to transfer of a high score;
Fig. 33 is a flowchart showing a series of steps executed by the master in regard to a memory card having a time limit;
Fig. 34 is a flowchart showing a series of steps executed by the slave in regard to a memory card having a time limit;
Fig. 35 is a flowchart showing a series of steps executed by the master in regard to the setting of an ID;
Fig. 36 is a diagram showing a display screen of the slave;
Fig. 37 is a plan view showing the slave whose screen displays a name;
Fig. 38 is a flowchart showing a series of steps for converting an entered name to an ID number;
Fig. 39 is a flowchart showing the flows of processing executed by the master and slave as well as the content of communication between the master and slave;
Fig. 40 is a flowchart showing steps through which a command message conforming to the state of a game is sent from the master to the slave;
Fig. 41 is a flowchart illustrating command interrupt processing;
Fig. 42 is a flowchart illustrating time-limit loop processing;
Fig. 43 is a diagram showing a time-limit command table;
Fig. 44 is a perspective view showing an example of a mode in which operation is performed by the slave in response to commands;
Fig. 45 is a block diagram showing a circuit that makes it possible to execute an artificial-life game;
Fig. 46 is a flowchart showing a series of the steps of an artificial-life game;
Fig. 47 is a block diagram showing a circuit that makes it possible to execute interaction between slaves;
Fig. 48 is a flowchart showing a series of steps of an interactive game;
Fig. 49 is a flowchart showing a series of steps related to generation of a game ID, game-event ID and currency ID;
Fig. 50 is a flowchart showing a series of steps regarding a hand-held video game machine applied to artificial life;
Fig. 51 is a flowchart showing a series of steps executed on the slave side in regard to a hand-held video game machine applied to artificial life;
Fig. 52 is a flowchart showing processing executed on the slave side in a stand-alone mode;
Fig. 53 is a flowchart showing a series of steps regarding transmission/reception;
Fig. 54 is a flowchart showing a series of steps of reception performed by the master;
Fig. 55 is a flowchart showing a series of steps regarding processing on the master side;
Fig. 56 is a diagram showing the display screen of a television receiver;
Fig. 57 is a flowchart showing a series of steps regarding processing on the slave side;
Fig. 58 is a flowchart showing a series of steps executed on the master side in regard to a game of the type in which the game unfolds while the user experiences an artificial world on a screen;
Fig. 59 is a flowchart showing a series of steps executed on the slave side in regard to a game of the type in which the game unfolds while the user experiences an artificial world on a screen;
Fig. 60 is a diagram showing an example of the arrangement of the principal components of a conventional memory card; and
Fig. 61 is a diagram showing an example of a video game station using a memory card as an auxiliary storage device.

### Best Mode for Carrying Out the Invention

A preferred embodiment according to the present invention will now be described with reference to the drawings. A portable electronic device embodying the present invention can be used as a memory card employed in an entertainment system such as a video game station serving as the master. The portable electronic device can also be used separately as a hand-held game machine. It should be noted that the master is not limited to a video game station and that the portable electronic device serving as the slave need not necessarily have a memory card function.

In the description that follows, the present invention is described in regard to a video game station which is an example of a master in which a portable electronic device embodying the present invention is employed as a slave.

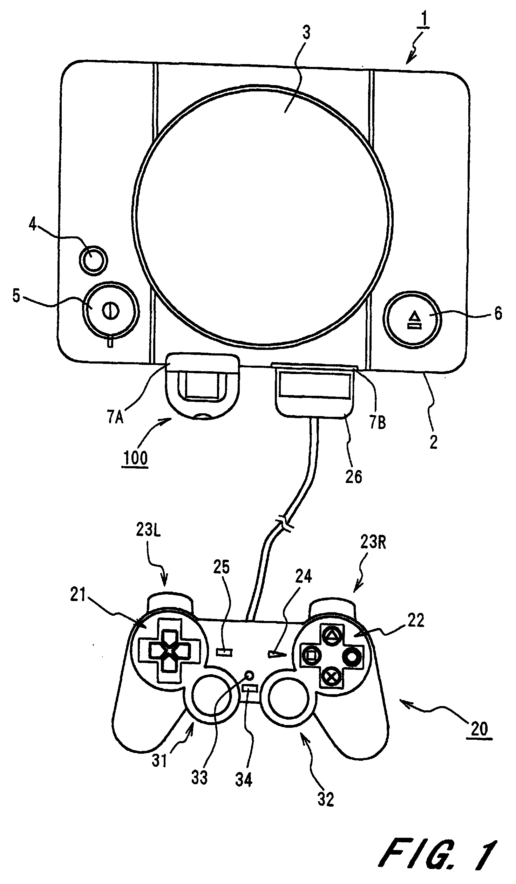

Fig. 1 shows the appearance of a video game station serving as the master in which the electronic device embodying the present invention is inserted. The video game station 1 is for reading out a game program that has been recorded on an optical disk or the like and for executing the program in accordance with commands from a user (the player of the game). Executing the game primarily means causing the game to proceed and controlling video and audio that conform to the content of the game.

The video game station 1 has a console 2 accommodated within a substantially quadrangular case and is constituted by a centrally provided disk mounting unit 3 in which is mounted an optical disk such as a CD-ROM serving as a recording medium for supplying an application program of a video game or the like, a reset switch 4 for resetting the game at will, a power-supply switch 5, a disk operating switch 6 manipulated for mounting the optical disk, and two slots 7A and 7B, by way of example.

It should be noted that the recording medium for supplying the application program is not limited to an optical disk. Further, an arrangement may be adopted in which the application program is supplied via a communications line.

Two controllers 20 can be connected to the slots 7A, 7B so that two users can play competitive games or the like against each other. The above-mentioned memory card or the portable electronic device embodying the present invention can be inserted into the slots 7A, 7B. Though Fig. 1 exemplifies a structure provided with the slots 7A, 7B of two systems, the number thereof is not limited to two.

The controller 20 has first and second control portions 21, 22 as well as a left button 23L, a right button 23R, a start button 24 and a select button 25. The controller further has control portions 31, 32 capable of analog control, a mode selection switch 33 for selecting the operating mode of the control portions 31, 32, and a display portion 34 for displaying the selected operating mode. Provided within the controller 20 is a vibration imparting mechanism, which is not shown.

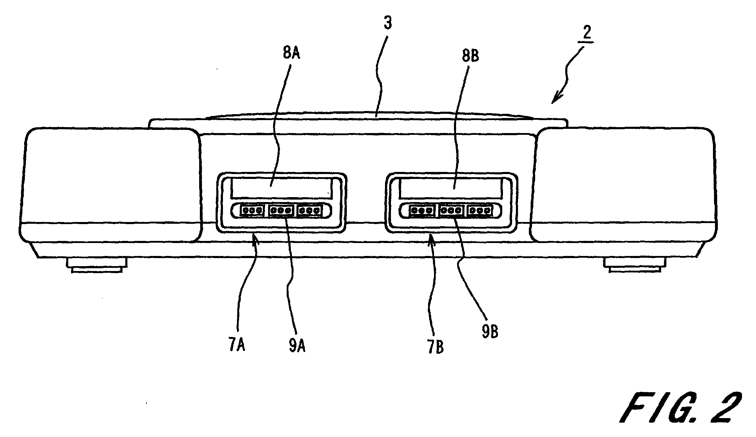

Fig. 2 shows the appearance of the slots 7A, 7B provided in the front side of the console 2 of video game station 1.

According to this embodiment, the slots 7A, 7B are each formed to have two levels. The upper levels of the respective slots are provided with memory card insertion portions 8A, 8B for inserting the above-mentioned memory card 10 or a portable electronic device 100, described later, and the lower levels of the respective slots are provided with controller connecting portions (jacks) 9A, 9B for connecting a connection terminal (connector) 26 of the controller 20.

Structurally, the insertion hole (slot) of each of the memory card insertion portions 8A, 8B is formed to have a transversely elongated rectangular shape, and the corners at both ends on the lower side thereof are made rounder than the corners at both ends on the upper side so that a memory card will not be inserted in the wrong direction. The memory card insertion portions 8A, 8B are provided with shutters which protect the connection terminals provided within the memory card insertion portions for the purpose of obtaining an electrical connection.

Structurally, the controller connecting portions 9A, 9B, on the other hand, each have an insertion hole of a transversely elongated rectangular shape, and the corners at both ends on the lower side thereof are made rounder than the corners at both ends on the upper side, whereby the connection terminal 26 of the controller 20 will not be connected in the wrong direction. The memory card insertion portions 8A, 8B are structured to have insertion holes of different shapes in such a manner that a memory card will not be inserted by mistake.

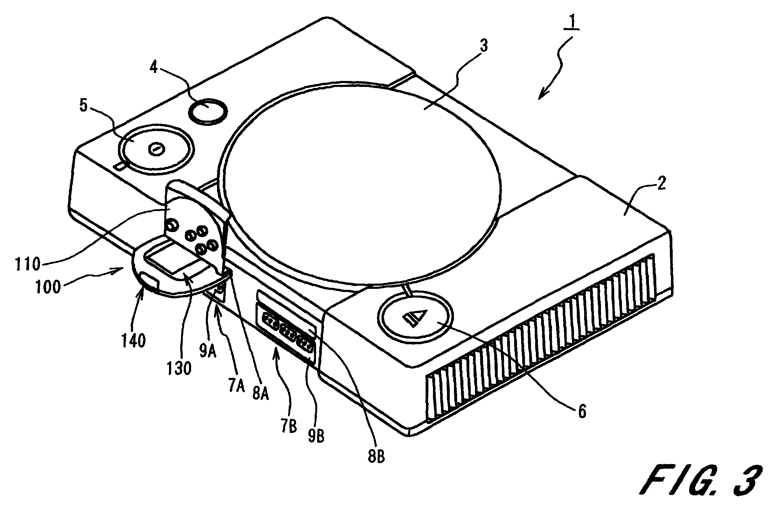

Fig. 3 shows a state in which the portable electronic device 100 (described later) embodying the present invention has been inserted into the memory card insertion portion 8A of slot 7A in the front side of the video game station 1.

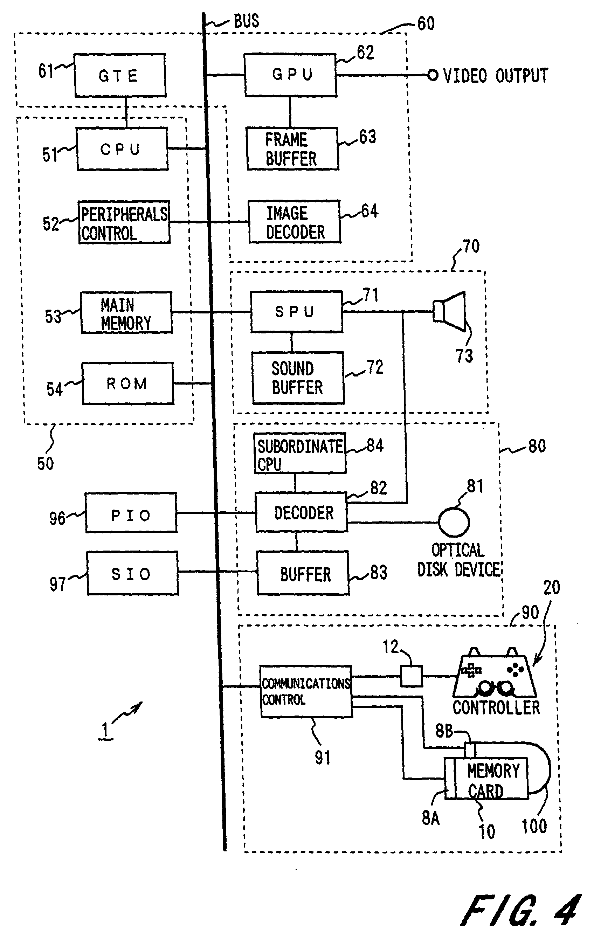

Fig. 4 is a block diagram showing schematically an example of the circuitry of the principal components of the above-described video game station 1.

The video game station 1 has a control system 50 comprising a central processing unit (CPU) 51 and its peripherals; a graphics system 60 comprising a graphic processing unit (GPU) 62, etc., for drawing graphics in a frame buffer 63; a sound system 70 comprising a sound processing unit (SPU) 71, etc., for generating music and sound effects, etc.; an optical-disk controller 80 for controlling an optical disk on which an application program has been recorded; a communications controller 90 for controlling input and output of data to and from the memory card 10, which stores signals and game settings from the controller 20 to which commands from the user are input, or portable electronic device 100, described later; and a bus denoted BUS to which each of the foregoing components is connected.

The control system 50 has the CPU 51, a peripherals controller 52 for performing control such as interrupt control and control of direct memory access (DMA) transfer, a main memory 53 comprising a random-access memory (RAM); and a read-only memory (ROM) 54 storing a program such as a so-called operating system that controls the main memory 53, graphic system 60 and sound system 70. The main memory mentioned here refers to a memory in which programs can be executed.

The CPU 51, which performs overall control of the video game station 1 by executing the operating system that has been stored in the ROM 54, is constituted by a 32-bit RISC-CPU, by way of example.

When power is introduced to this video game station 1, the CPU 51 of the control system 50 runs the operating system stored in the ROM 54, whereby the CPU 51 controls the graphics system 60 and sound system 70, etc. Further, when the operating system is run, the CPU 51 performs initialization of the overall video game station 1, such as verification of the operation thereof, and then controls the optical-disk controller 80 to execute an application program such as a game that has been recorded on an optical disk. In response to execution of a program, such as a game, the CPU 51 controls the graphics system 60 and sound system 70, etc., in conformity with inputs from the controller 20, thereby controlling the display of images and the generation of sound effects and music.

The graphics system 60 has a geometry transfer engine (GTE) 61 for executing coordinate transformation and the like, the GPU 62 for drawing graphics in accordance with a draw command from the CPU 51, a frame buffer 63 for storing an image drawn by the GPU 62, and an image decoder 64 for decoding image data that has been compressed and encoded by an orthogonal transformation such as a discrete cosine transformation.

The GTE 61, which has a parallel operation mechanism for executing a plurality of arithmetic operations in parallel, is capable of executing a coordinate transformation, light-source calculation and matrix or vector operation, etc., at high speed in response to an operation request from the CPU 51. More specifically, in case of a calculation where one polygon of a triangular shape is subjected to flat shading so as to be rendered in the same color, the GTE 61 is capable of calculating the coordinates of a maximum of 1,500,000 polygons in one second. As a result, the video game station is capable of reducing the load upon the CPU 51 and of calculating coordinates at high speed.

The GPU 62 draws polygons and the like in the frame buffer 63 in accordance with a draw command from the CPU 51. The GPU 62 is capable of drawing a maximum of 360,000 polygons in one second.

The frame buffer 63, which comprises a so-called dual-port RAM, is capable of performing simultaneously the transfer of draw data from the GPU 62 or main memory and read-out for displaying what has been drawn. The frame buffer 63, which has a capacity of 1 MB, is treated as a 16-bit matrix composed of 1024 pixels in the horizontal direction and 512 pixels in the vertical direction. Further, besides a display area from which data is output as video, the frame buffer 63 is provided with a CLUT area in which is stored a color look-up table (CLUT) to which reference is had when the GPU 62 draws polygons or the like, and a texture area, in which is stored texture subjected to a coordinate transformation at the time of drawing and then inserted into (mapped to) polygons drawn by the GPU 62. The CLUT area and texture area change dynamically in accordance with a change, etc., in the display area.

Besides performing the flat shading mentioned above, the GPU 62 is capable of executing Gouraud shading, which decides the color in a polygon by interpolation from the colors at the apices of the polygon, and texture mapping, in which texture that has been stored in the texture area is mapped to polygons. In a case where Gouraud shading or texture mapping is carried out, the GTE 61 is capable of calculating the coordinates of a maximum of 500,000 polygons in one second.

Furthermore, under control of the CPU 51, the image decoder 64 decodes image data representing still or moving images stored in the main memory 53, and stores the decoded data in the main memory 53.

The image data thus reproduced is stored in the frame buffer 63 via the GPU 62, whereby the image data is capable of being used as the background of the image drawn by the GPU 62.

The sound system 70 has an SPU 71 for generating music and sound effects based upon a command from the CPU 51, a sound buffer 72 in which data such as waveform data is stored by the SPU 71, and a speaker 73 for outputting music and sound effects, etc., generated by the SPU 71.

The SPU 71 has an ADPCM decoding function for reproducing audio data obtained by adaptive differential PCM (ADPCM) using 16-bit audio data as a 4-bit differential signal, a reproducing function for generating sound effects and the like by reproducing waveform data that has been stored in the sound buffer 72, and a modulating function for modulating and reproducing the waveform data that has been recorded in the sound buffer 72.

Provision of these functions enables the sound system 70 to be used as a so-called sampling sound source, which generates music and sound effects, based upon the waveform data recorded in the sound buffer 72, in response to a command from the CPU 51.

The optical-disk controller 80 has an optical disk device 81 for reproducing programs, data and the like that have been recorded on an optical disk, a decoder 82 for decoding programs, data and the like that have been recorded following assignment of, e.g., error correction codes (ECC) thereto, and a buffer 83 in which data from the optical disk device 81 is stored temporarily, thereby speeding up the read-out of data from the optical disk. A subordinate CPU 84 is connected to the decoder 82.

In addition to ADPCM data, so-called PCM data, which is the result of subjecting an audio signal to an analog-to-digital conversion, is an example of audio data recorded on the optical disk and read out by the optical disk device 81.

As for ADPCM data, audio data that has been recorded using four bits to express, e.g., a 16-bit digital data differential is decoded by the decoder 82, after which the decoded data is supplied to the SPU 71. Here the data is subjected to processing such as a digital/analog conversion and then is used to drive the speaker 73.

As for PCM data, audio data that has been recorded as, e.g., 16-bit digital data is decoded by the decoder 82 and is then output to the speaker 73.

The communications controller 90 has a communications controller 91 for controlling communication with the CPU 51 via the bus denoted BUS. The communications controller 91 is provided with controller connecting portions 9A, 9B, to which the controller 20 for entering commands from the user is connected, and with memory card insertion portions 8A, 8B, to which is connected the memory card 10 or portable electronic device 100, described later, serving as an auxiliary storage device for storing game settings data and the like.

The controller 20 connected to the controller connecting portions 9A, 9B has, say, 16 instruction keys in order that the user may enter commands. In accordance with a command from the communications controller 91, the controller 20 transmits the states of these instruction keys to the communications controller 91 at a cycle of 60 times per second by synchronous communication. The communications controller 91 transmits the states of the instruction keys of controller 20 to the CPU 51.

As a result, the command from the user is input to the CPU 51 which, on the basis of the game program, etc., currently being run, executes processing that is in accordance with the command from the user.

It is required that a large quantity of image data be transferred at high speed when program read-out, image display and drawing of graphics, etc., are executed among the main memory 53, GPU 62, image decoder 64 and decoder 82. Accordingly, the video game station is so adapted that so-called DMA transfer can be carried out for direct transfer of data among the main memory 53, GPU 62, image decoder 64 and decoder 82 by control from the peripherals controller 52 without the intervention of the CPU 51. As a result, the load on the CPU 51 that accompanies data transfer can be alleviated and high-speed data transfer can be performed.

When it is necessary to store setup data of a game currently being run, the CPU 51 transmits the data that is to be stored to the communications control circuit 91. Upon receiving the data sent from the CPU 51, the communications controller 91 writes the data to the memory card 10 or portable electronic device 100 that has been inserted into the slot of memory card insertion portion 8A or 8B.

It should be noted that the communications controller 91 has a built-in protection circuit to prevent electrical destruction. The memory card 10 and portable electronic device 100, which are separate from the bus denoted BUS, can be inserted and extracted in a state in which the game station console is being supplied with power. In situations where the storage capacity of the memory card 10 or portable electronic device 100 is no longer adequate, therefore, a new memory card can be inserted without cutting off power to the console. As a result, game data requiring power back-up will not be lost; a new memory card can be inserted and the necessary data can be written to the new memory card.

A parallel I/O interface (PIO) 96 and a serial I/O interface (SIO) 97 are interfaces for connecting the memory card 10 and portable electronic device 100 to the video game station 1.

The portable electronic device embodying the present invention will be described next. It is assumed below that the portable electronic device 100 according to the present invention is used as a slave upon being inserted into the above-described video game station 1 serving as the master.

The portable electronic device 100 serving as the slave is inserted into either of the memory card insertion portions 8A, 8B provided in the slots 7A, 7B, respectively, of the video game station 1 serving as the master. Portable electronic devices can be used also as unique memory cards corresponding to a plurality of connected controllers 20. For example, in an instance where two users (game players) play the game, the two portable electronic devices 100 function so that the game results of the individual users are recorded on respective ones of the two portable electronic devices.

The connector of the memory card 10 or portable electronic device 100 is so adapted that the conductor of the connection terminal for the power supply or for ground is formed to be longer than the other terminals in such a manner that the power-supply terminal or ground terminal will form an electrical connection first when the memory card 10 or portable electronic device 100 is inserted into the memory card insertion portions 8A, 8B. This is to ensure the safety and stability of electrical operation. An arrangement may be adopted in which the connection conductors of the memory card insertion portions 8A, 8B provided in the video game station 1 are formed to be longer, or in which both of the conductors are formed to be longer. Further, the connector portions are formed to have left/right asymmetry in order to prevent erroneous insertion.

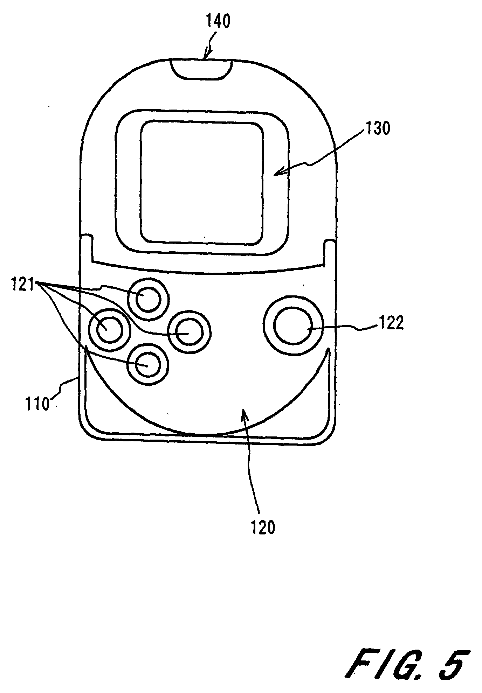

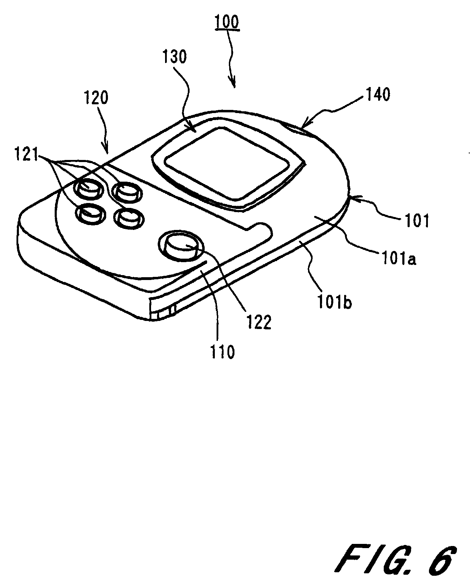

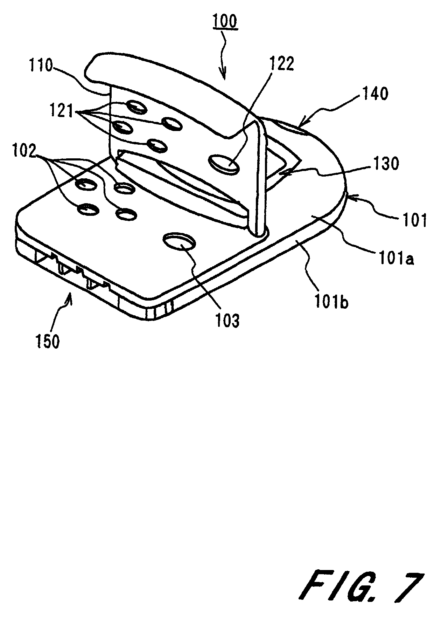

Figs. 5 to 7 illustrate the appearance of the portable electronic device 100 embodying the present invention, in which Fig. 5 is a plan view of the portable electronic device 100, Fig. 6 a perspective view in which a cover member 110 for protecting the connector portion is shown in the closed state, and Fig. 7 a perspective view showing the cover member 110 in the open state.

As shown in Figs. 5 to 7, the portable electronic device 100 according to the present invention has a housing 101. The housing 101 is provided with an operating section 120 having one or a plurality of operating elements 121, 122 for entering events and making various selections, a display section 130 comprising a liquid crystal display device (LCD), and a window 140 for performing wireless communication, as by infrared, by wireless communications means, described later.

The housing 101 comprises an upper shell 101a and a lower shell 101b and houses a substrate 151 mounting memory devices and the like. The housing 101 is capable of being inserted into the slots 7A, 7B in the console of the video game station 1. The base end of the housing has a side face provided with a connector portion 150 formed to have a rectangular-shaped opening.

The window 140 is provided in the generally semi-circular other end of the housing 101. The display section 130 is provided at a position in the vicinity of the window 140 on the top side of the housing 101 and occupies an area that is approximately half of the top side. The operating section 120 is provided at a portion opposite the window 140 on the top side of the housing 101 and occupies an area that is approximately half of the top surface. The operating section 120 has a substantially quadrangular shape and is constituted by a cover member 110, which is pivotally supported on the housing 101 and has one or plurality of operating elements 121, 122, and switch pushers 102, 103 provided at a position opened and closed by the cover member 110 on housing 101.

The operating elements 121, 122 are disposed passing through the cover member 110 from its upper to its lower side. The operating elements 121, 122 are supported on the cover member 110 in such fashion as to be movable in a direction in which they recede from the top side of the cover member 110.

The switch pushers 102, 103 have pushing elements supported on the housing 101 in such fashion as to be movable in a direction in which they recede from the top side of the cover housing 101. By pushing the pushing elements from above, push switches such as diaphragm switches disposed on the substrate 151 in the housing 101 are pushed.

The switch pushers 102, 103 are provided at positions corresponding to the positions of the operating elements 121, 122 when the cover member 110 is closed. More specifically, when the operating elements 121, 122 are pushed from above in a direction in which they recede from the top side of the cover member 110 in the closed state, the operating elements 121, 122 push the corresponding push switches in the housing 101 via the pushing elements of the corresponding switch pushers 102, 103.

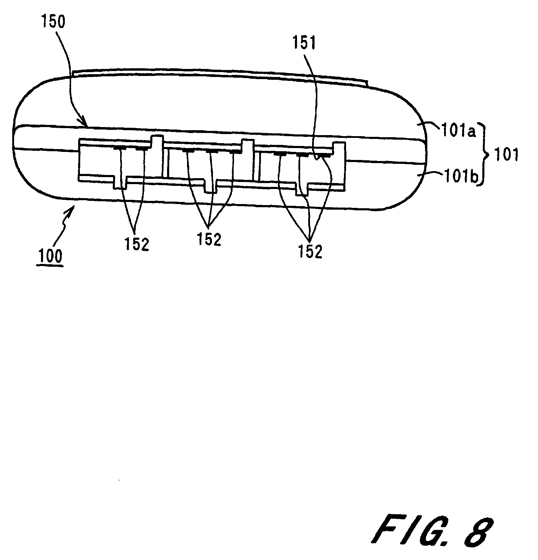

As shown in Fig. 8, power and signal terminals 152 are disposed on the substrate 151 within the window of the connector portion 150.

The shape, dimensions, etc. of the connector portion 150 are common with those of the ordinary memory card 10 used with the video game station 1.

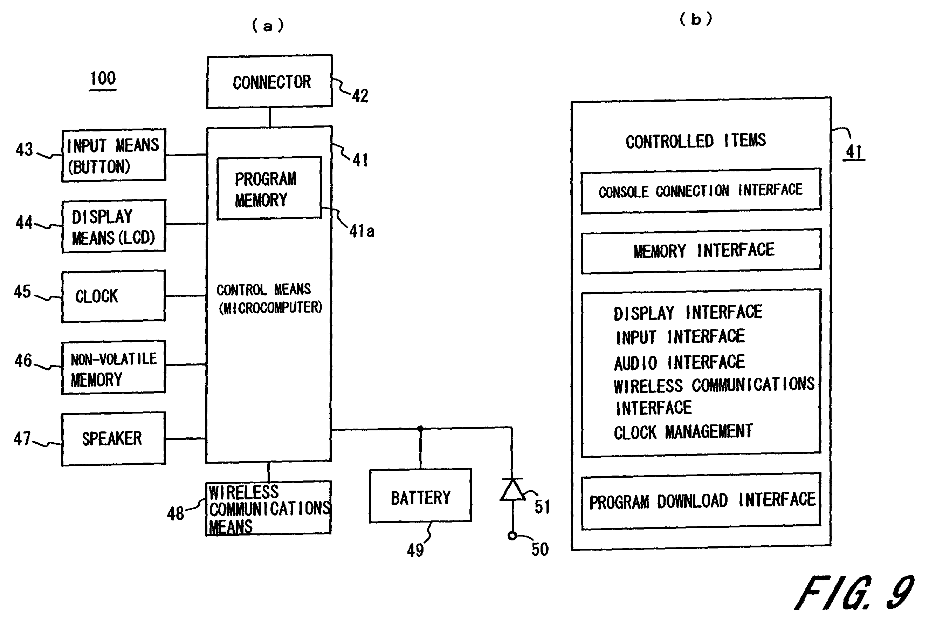

Fig. 9(a) is a block diagram showing an example of the arrangement of the principal components of the portable electronic device.

In a manner similar to the ordinary memory card 10 described above, the portable electronic device 100 has control means 41 for controlling its operation, a connector 42 for effecting a connection to a slot of information equipment or the like, and a non-volatile memory 46 serving as a device for storing data.

The control means 41, which is constituted by, say, a microcomputer, has an internally provided program memory 41a. A semiconductor memory device in which the state of recorded data remains intact even when power is cut off, as in the manner of a flash memory, is used as the non-volatile memory 46. It should be noted that the because the portable electronic device 100 according to the present invention is configured to be equipped with a battery 49, as will be described later, a static random-access memory (SRAM) capable of high-speed input/output of data can be used as the non-volatile memory 46.

The portable electronic device 100 differs in that, in addition to the components mentioned above, it has operation (event) input means 43 such as operating buttons for operating a stored program, display means 44 such as a liquid crystal display device (LCD) serving as display means for displaying various information in conformity with the above-mentioned program, wireless communications means 48 for sending data to and receiving data from another memory card or the like by infrared radiation, and a battery 49 for powering each of the foregoing components.

The portable electronic device 100 internally accommodates a miniature battery 49 as power supply means. This means that the portable electronic device is capable of operating independently even if it has been pulled out of the slots 7A, 7B of the video game station 1 constituting the master. A rechargeable secondary cell may be used as the battery 49. It is so arranged that power is supplied from the video game station 1 serving as the master when the portable electronic device 100 serving as the slave has been inserted into either of the slots 7A, 7B of the video game station 1 serving as the master. That is, a power-supply terminal 50 is connected to the connection terminal of the battery 49 via a diode 51 for preventing reverse current. When the portable electronic device has been connected by insertion into the slot of the master, such as the video game station 1, power is supplied from the master to the slave. Furthermore, in a case where a secondary cell is being used, charging of the secondary cell also takes place.

The portable electronic device 100 further includes a clock 45 and a speaker 47, which serves as sound generating means for generating sound in conformity with the program. It should be noted that the above-mentioned components are all connected to the control means 41 and operate in accordance with control exercised by the control means 41.

Fig. 9(b) illustrates the items controlled by the control means 41. Though the only interfaces with which the ordinary memory card 10 is equipped are the interface for the connection to the console of the information equipment and the memory interface for input/output of data with respect to memory, the portable electronic device 100 of this embodiment has, in addition to these interfaces, a display interface, an operation-input interface, an audio interface, a wireless communications interface, a clock interface and a program-download interface.

Thus, the interfaces (drivers) for managing the functions added on by the present embodiment are provided in the control means (microcomputer) 41 independently of the console (master) connection interface and independently of non-volatile memory management, which are the conventional functions. For this reason compatibility with the conventional functions can be maintained.

Further, since the portable electronic device 100 has the input means 43, such as a button switch, for operating an executed program, and the display means 44 using the liquid crystal display device (LCD) or the like, the portable electronic device 100 is capable of being used as a hand-held game machine for running a game application.

Moreover, since the portable electronic device 100 possesses a function for storing application programs, which are downloaded from the console of the video game station 1, in the program memory 41a in microcomputer 14, application programs can be run on the portable electronic device 100. The stored application programs and various types of driver software can be altered with facility.

The portable electronic device 100 according to this embodiment can be controlled independently of the video game station 1, as described above. On the side of the portable electronic device 100, therefore, data based upon an application program that has been stored in the program memory 41a serving as the program storage means can be created independently of the application software on the side of the video game station 1. By exchanging this data with the video game station 1, the portable electronic device 100 and the video game station 1 are capable of cooperative (linked) operation.

Furthermore, the fact that the portable electronic device 100 is equipped with the clock 45 makes it possible for time data to be shared with the video game station 1. In other words, not only is mutual time data made to coincide but both the video game station and the portable electronic device also share data that is for controlling, in real time, the progress of games that are run on them independently.

A specific example of the cooperative operation between the video game station 1 and portable electronic device 100 will be described later.

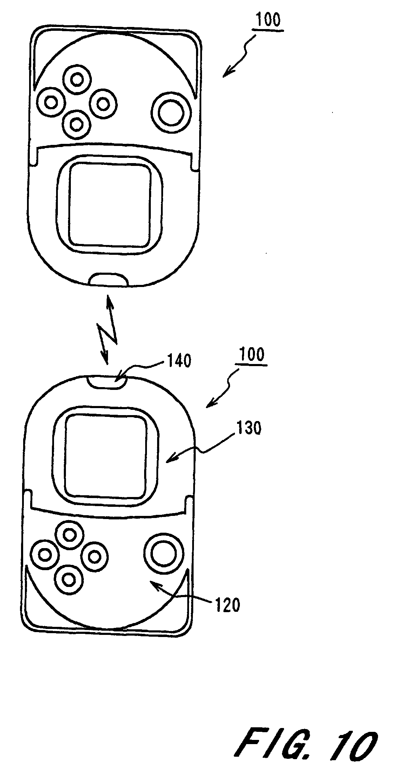

Fig. 10 illustrates schematically the manner in which wireless communication is performed between a portable electronic devices 100 according to the present invention By thus utilizing the wireless communications means 48, the portable electronic device 100 can exchange internal data with a plurality of memory cards by sending and receiving data via the window 140, which is a wireless communication window for performing wireless communication by infrared or the like. The internal data includes also data that has been transferred from the side of information equipment, such as the video game station, and stored in storage means within a memory card.

In the embodiment set forth above, the portable electronic device 100 is described as being used as the auxiliary storage device of a video game station. However, the object of application is not limited to a video game station, and the device is of course applicable to, e.g., the retrieval of various information.

The invention will now be described in regard to cooperative operation between the portable electronic device 100 and the video game station 1 serving as the master.

As mentioned above, the portable electronic device 100 and the console of video game station 1 can share game data generated by the microcomputer 41 serving as control means, time data obtained by the clock 45 in the memory card, and data generated by another memory card and obtained via the wireless communications means 48, etc.

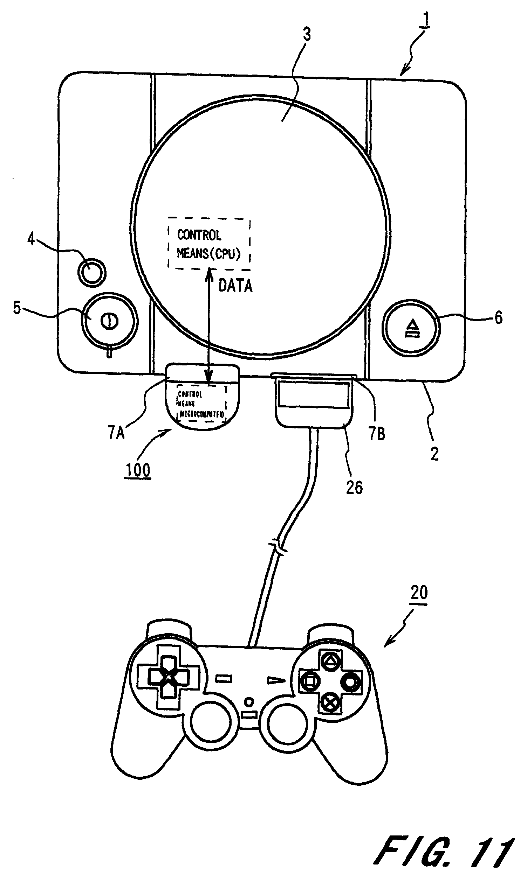

Fig. 11 illustrates schematically the manner in which the video game station 1 serving as the master and the portable electronic device 100 serving as the slave perform a cooperative operation.

Described below as an example of such cooperative operation is a case where an optical disk (CD-ROM), which is a recording medium on which an application software program has been recorded, has been loaded in the video game station 1 serving as the master, and the program read out of the disk is downloaded to the portable electronic device 100 serving as the slave inserted into either of the slots 7A, 7B of the console of the video game station 1.

Downloading of a program on the assumption that it is for performing a cooperative operation will be discussed before giving a specific description regarding the cooperative operation.

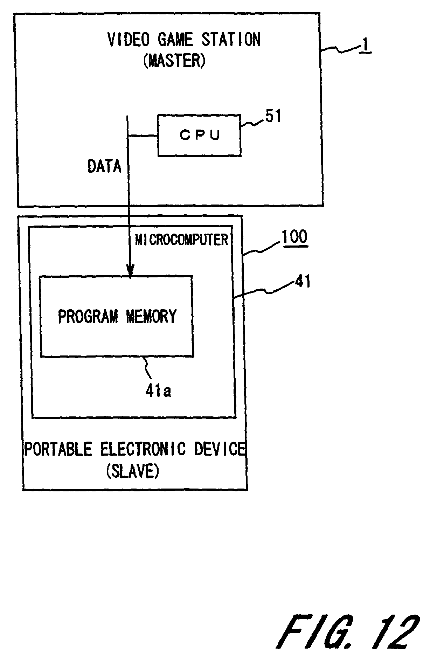

Fig. 12 illustrates the flow of data in an instance where the application program of a video game supplied from an optical disk (CD-ROM), etc., mounted on the disk mounting unit 3 of the master video game station 1 is transferred directly (downloaded) to the program memory 41a serving as program storage means in the microcomputer 41, which is the control means of the portable electronic device 100 serving as the slave, via the control means (CPU) 51 of video game station 1.

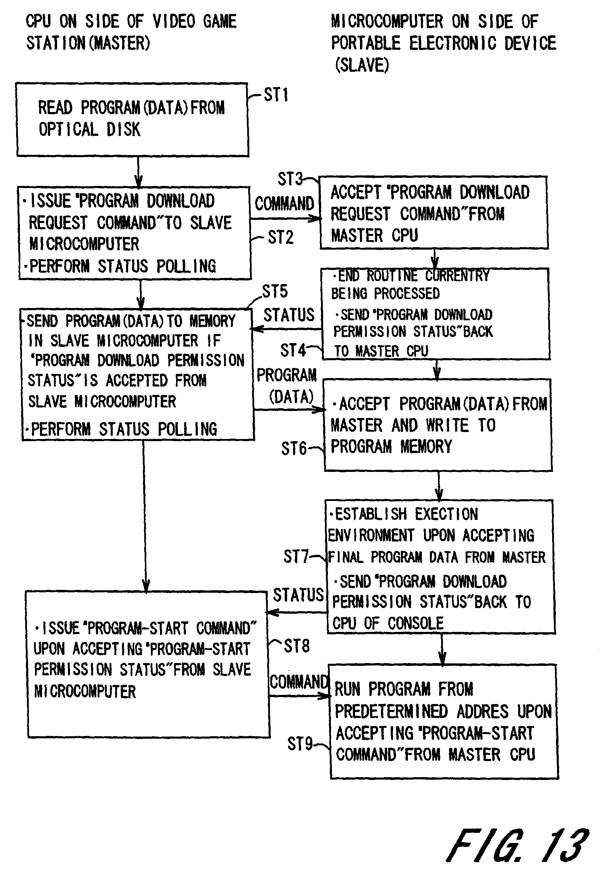

Fig. 13 illustrates the download procedure of Fig. 12.

At step ST1, the application program of a video game that runs on the microcomputer in the slave portable electronic device 100 (referred to simply as the "slave" hereafter) is read as data out of the CD-ROM that has been mounted on the disk mounting unit 3 of the master video game station 1 (referred to simply as the "master" hereafter). As mentioned earlier, this application program generally is different from that which runs on the master video game station 1.

Next, at step ST2, the CPU 51 serving as the control means of the master issues a "program download request command" to the microcomputer 41 serving as the control means of the slave portable electronic device 100. The CPU 51 performs polling in order to accept "program download permission status" from the microcomputer 41. The polling mentioned here refers to a method of performing a service upon inquiring as to whether the service has been requested or not.

The microcomputer 41 of the portable electronic device 100 serving as the slave accepts the "program download request command" from the CPU 51 of the master at step ST3.

When the microcomputer 41 on the slave side ends the routine currently being processed and a state in which program download can be executed is attained, the microcomputer sends "program download permission status" back to the CPU 51 of the master at step ST4.

Next, upon accepting "program download permission status" from the microcomputer 41 on the slave side at step ST5, the CPU 51 of the master transfers (downloads) and writes the program, which was read out of the CD-ROM at step ST1, to the program memory 41a serving as the program storage means of portable electronic device 100. The CPU 51 performs polling in order to accept "program-start permission status" from the microcomputer 41.

The address of the program memory 41a to which the downloaded data is written is managed by the microcomputer 41 of the slave at this time. In the description rendered above, a case in which the program downloaded from the master is stored in the program memory 41a within the microcomputer 41 is taken as an example. However, an arrangement may be adopted in which the program is stored in a storage device such as an SRAM that is capable of inputting and outputting data at high speed.

The microcomputer 41 of the memory card accepts as data the program that has been transferred from the master and writes this data to the program memory 41a at step ST6. From the point of view of the CPU 51 of the master, it appears that the program data is being written directly to the program memory 41a of the portable electronic device 100 serving as slave. In addition, the address of the program memory 41a is managed by the microcomputer 41.

Upon accepting the final program data from the master and then establishing an environment in which the program can be executed, the microcomputer 41 of the portable electronic device 100 sends "program-start permission status" back to the CPU 51 of the console at step ST7.

The CPU 51 of the master accepts "program-start permission status" from the microcomputer 41 of the portable electronic device 100 and issues a "program-start command" at step ST8.

Upon receiving the "program-start command" from the CPU 51 of the master, the microcomputer 31 of the portable electronic device 100 starts running the program from a predetermined starting address.

By way of the foregoing procedure, the application program is transferred directly (downloaded) from the master video game station 1 to the program memory 41a in the microcomputer 41 of the portable electronic device 100 serving as the slave that has been inserted.

As mentioned above, the means which supplies the application program is not limited to a storage medium such as the optical disk, and an arrangement in which it is supplied via a communication line may be adopted. Only step ST1 would differ in the above-described procedure in such case.

It should be noted that the foregoing download procedure has been described for a case where the application program is downloaded directly from the video game station 1 of the master to the program memory 41a in the microcomputer 41 of serving as the control means of the portable electronic device 100 slave that has been inserted.

By contrast, there is also a case where the CPU 51 of the master downloads the data of an application program to the non-volatile memory 46 in the slave portable electronic device 100, after which this data is copied to the program memory 41a in the microcomputer 41, where the program is then executed.

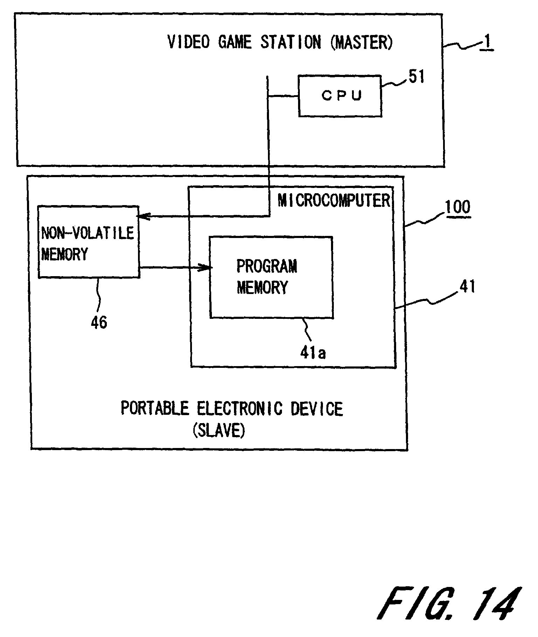

Fig. 14 illustrates the flow of data in such case. Specifically, the application program of a video game supplied from an optical disk or the like mounted on the disk mounting unit 3 of the master video game station 1 is transferred (downloaded) to the non-volatile memory 46 in the portable electronic device 100 serving as the slave via the CPU 51 serving as the control means of the video game console 1, after which the program is copied to the program memory 41a in the microcomputer 41 as the control means and executed.

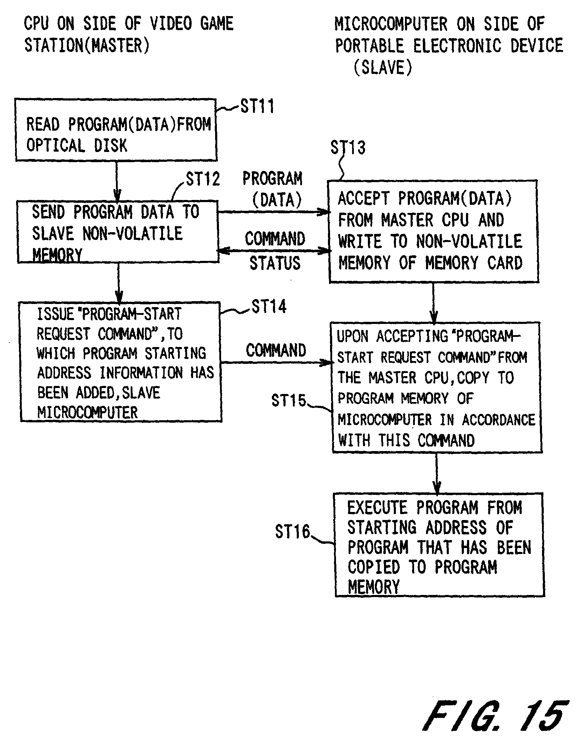

Fig. 15 illustrates the download procedure.

At step ST11, the application program of a video game that runs on the microcomputer in the portable electronic device 100 serving as the slave is read as data out of the CD-ROM that has been mounted on the disk mounting unit 3 of the video game station 1 serving as the master.

Next, at step ST12, the CPU 51 of the master transfers (downloads) the program data read out of the CD-ROM to the non-volatile memory 46 of the portable electronic device 100 serving as the slave. This procedure is similar to that of the case where data is backed up in the conventional video game station.

Next, at step ST13, by means similar to that for conventional data backup, the microcomputer 41 serving as the control means of the portable electronic device 100 accepts as data the application program that has been transferred from the CPU 51 of the master and writes this data to the non-volatile memory 46.

This is followed by step ST14 where, upon receiving a "program-start request command" from the CPU 51 of the master, the microcomputer 41 of the portable electronic device 100 copies data of a designated size from an address of the non-volatile memory 46 designated by the above-mentioned command to the program memory 41a in the microcomputer 41.

The microcomputer 41 of the portable electronic device 100 executes the program, which was copied to the program memory 41a, from the starting address of this memory.

By way of the foregoing procedure, the program of the application software is transferred (downloaded) as data, via the non-volatile memory 46, from the master video game station 1 to the program memory 41a in the microcomputer 41 of the portable electronic device 100 that has been inserted.

It should be noted that the application program downloaded from the video game station 1 to the portable electronic device 100 generally is different from that which runs on the master video game station 1. Of course, the above-mentioned downloaded application program may be one that runs on both the video game station 1 and the portable electronic device 100. In such case, however, a constraint imposed is that the CPU on the side of the video game station 1 and the microcomputer on the side of the portable electronic device 100 be identical processors.

Described next will be cooperative operation performed while the application software that has been downloaded from the master video game station 1 through the foregoing procedure is executed in the slave portable electronic device 100 independently and the result of execution is again exchanged with the video game station 1.

Here attribute data of personages or characters that appear in a so-called role-playing game that runs on the video game station 1 of the master is downloaded to the portable electronic device 100 of the slave. The attribute data is data that represents extent of growth, personality, etc.

By nurturing the appearing personages or characters in the program executed by the microcomputer 41 within the slave portable electronic device 100, the attributes thereof are caused to change independently of the program executed by the console of the video game station 1 serving as the master.

The portable electronic device 100 embodying the present invention is configured so as to operate independently and, moreover, is small in size and convenient to carry about. As a result, the personages and characters that make an appearance owing to the program run on the portable electronic device 100 can be carried about and nurtured by the user (the player of the game) at any time. The attributes of the appearing personages and characters nurtured under the care of the user can also be transferred (uploaded) from the portable electronic device 100 to the console of video game station 1 by the user. In this case the appearing personages and characters whose attributes have been changed can be incorporated in the program being run on the master video game station 1 and made to act in the program.

Thus, as described above, it is possible to implement a video game in which cooperative operation can be carried out by sharing the attribute data of personages and the like with both the video game station 1 constituting the master and portable electronic device 100 constituting the slave and by causing the attribute to change in each of these devices.

Next, a game played using the above-mentioned video game station 1 serving as the master and the portable electronic device 100 serving as the slave will be described in detail. For the sake of simplicity, the video game station 1 shall be referred to simply as the "master" and the portable electronic device 100 as the "slave" below.

Described first will be a learning tool using a master and a slave connected to it, namely a master game machine and a slave gave machine connected to it.

The content of lessons has been recorded on the master game machine. A player takes lessons using the master and a television receiver at home and takes a confirmation test on the content of lessons.

As a result of the confirmation test on lesson content, a review test for the slave is created based upon problems for which the correct answer was not given and other items. The test problems are saved in the slave and the player reviews the problems while carrying the slave about. The results of the problems worked on using the slave are transferred to the master again.

The learning tool will now be described in detail.

The content of lessons is stored on the CD-ROM of the master. The player takes lessons using the master and a television receiver at home and takes a confirmation test on the content of the lessons.

As a result of the confirmation test, a review test for the slave is created by the master based upon problems for which the correct answer was not given and items not remembered by the player. The master transmits the review test to the slave.

The player extracts the slave and takes the review test using the slave while away from home, for example. In addition to taking a test, the player can study spelling and English vocabulary, etc.

Upon returning home, the player connects the slave to the master and transmits the results of the review test to the master.

Based upon the result of the review test and the next item of the curriculum stored on the CD-ROM, the master creates the content of the next lesson and returns to the beginning.

A series of steps for creating the next lesson based upon the result of a review test will now be described.

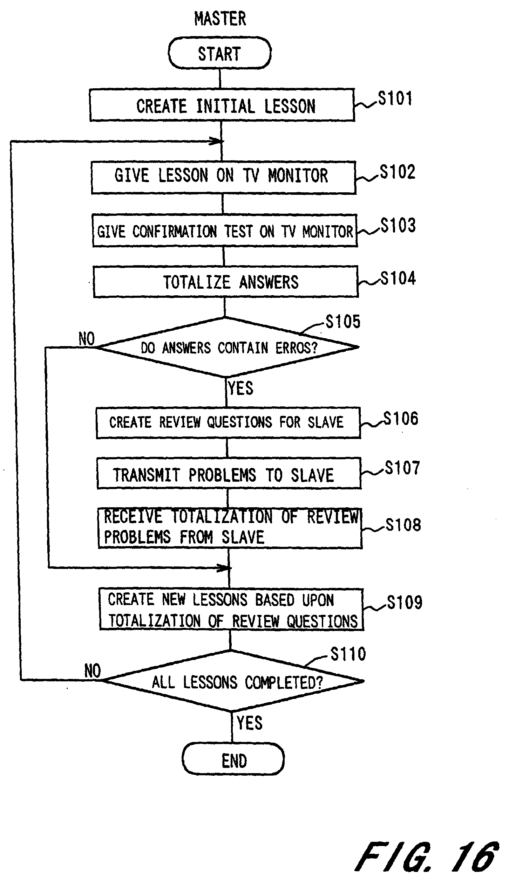

A series of steps executed on the master side is illustrated by the flowchart shown in Fig. 16. Specifically, the master creates an initial lesson at an initial step S101, gives the lesson on a TV monitor at the next step S102 and then totalizes the test results at step 104. Control then proceeds to step S105.

The master determines at step S105 whether answers to the confirmation test given at step S103 contain an error. A "YES" decision is rendered and control proceeds to step S106 if there is an incorrect answer, and a "NO" decision is rendered and control proceeds to step S109 if there are no incorrect answers.

The master creates practice problems for the slave at step S106, transmits the problems to the slave at step S107, receives the totalized score of the practice problems from the slave at step S108 and creates a new lesson based upon the totalized score at step S109. Control then proceeds to the next step S110.

Processing in regard to whether or not all lessons have been completed branches at step S110. A "NO" decision is rendered and control returns to step S102 if all lessons have not been completed, and a "YES" decision is rendered and this series of steps is concluded if all lessons have been completed.

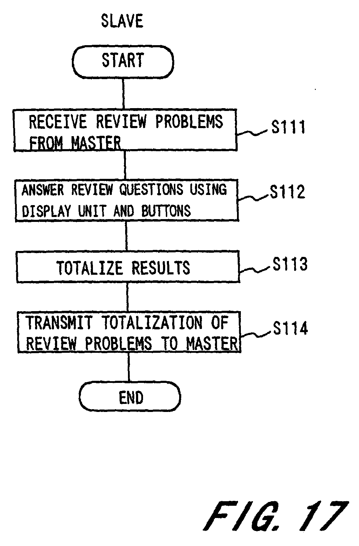

A series of steps executed on the slave side is illustrated in the flowchart of Fig. 17. Specifically, the slave receives review problems from the master at step S111, answers the problems using a display unit and buttons at step S112, totalizes the results at step S113 and transmits the total of the problem score to the master at step S114. This series of steps is exited at step S114.

Described next will be a learning tool through which lessons are not given at home.

Upon reading in one day's problems from the CD-ROM, the master transmits these problems to the slave as is. All learning is done using the slave. The master totalizes the results of study and transmits the next day's problems to the slave again.

A series of steps executed by the master and slave in a case where the results of a review test are thus totalized will now be described with reference to flowcharts.

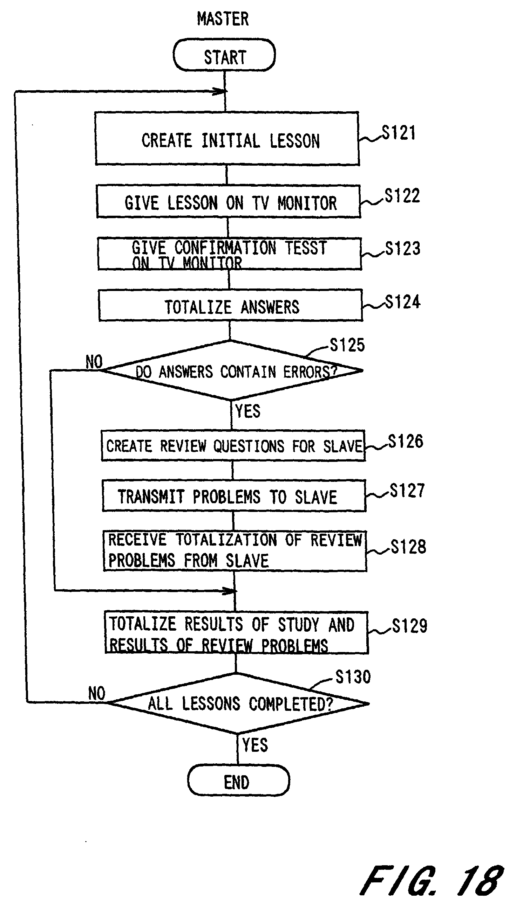

As illustrated in the flowchart of Fig. 18, the series of steps on the master side includes creating the content of lessons from a CD-ROM at the initial step S121, taking lessons using a TV monitor at step S122, taking a confirmation test using the TV monitor at step S123 and totalizing the answers to the confirmation test at step S124. Control then proceeds to the next step S125.

Processing branches at step S125 depending upon whether there is an incorrect answer. Specifically, a "YES" decision is rendered and control proceeds to step S126 if there is an incorrect answer, and a "NO" decision is rendered and control proceeds to step S129 if there is no incorrect answer.

The master creates review problems for the slave at step S126, transmits the problems to the slave at step S127, receives a total of the review problem score from the slave at step S128 and totalizes the results of study and the results of the review problems at step S129. Control then proceeds to the next step S130.

Processing in regard to whether or not all lessons have been completed branches at step S130. That is, a "NO" decision is rendered and control returns to step S121 if all lessons have not been completed, and a "YES" decision is rendered and this series of steps is concluded if all lessons have been completed.

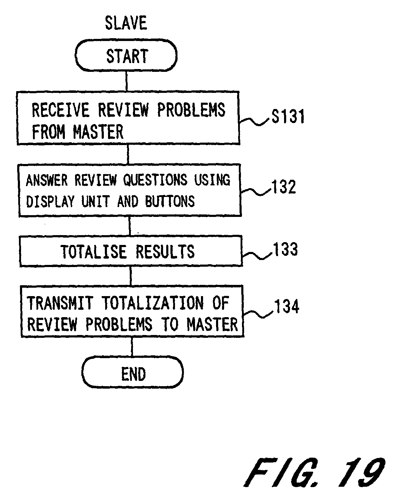

As illustrated in the flowchart of Fig. 19, the series of steps on the slave side includes receiving review problems from the master at the initial step S131, answering the problems using a display unit and buttons at step S132, totalizing the review problem score at step S133 and transmitting the total of the problem score to the master at step S124. This series of steps is then exited.

Steps through which one day's problems are sent to the slave without giving lessons will be described with reference to flowcharts.

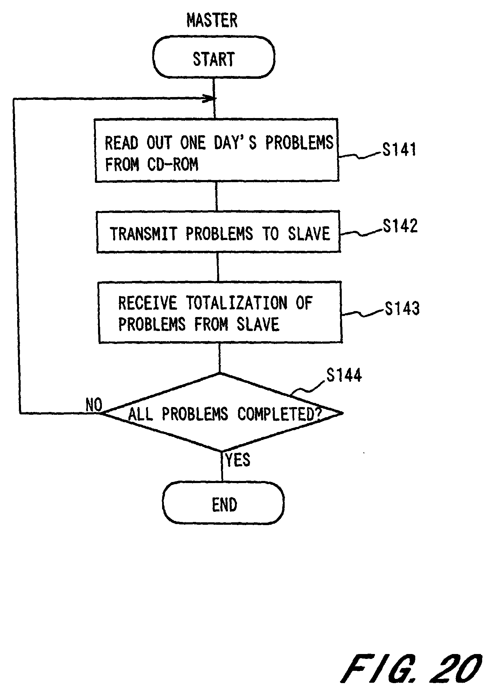

As shown in the flowchart of Fig. 20, the steps executed by the master include reading one day's problems out of the CD-ROM at step S141, transmitting the problems to the slave at step S142 and receiving a total of the problem score from the slave. Control then proceeds to the next step S144.

Processing branches at step S144 depending upon whether all problems have been completed. A "NO" decision is rendered and control returns to step S141 if all problems have not been completed, and a "YES" decision is rendered and this series of steps is concluded if all problems have been completed.

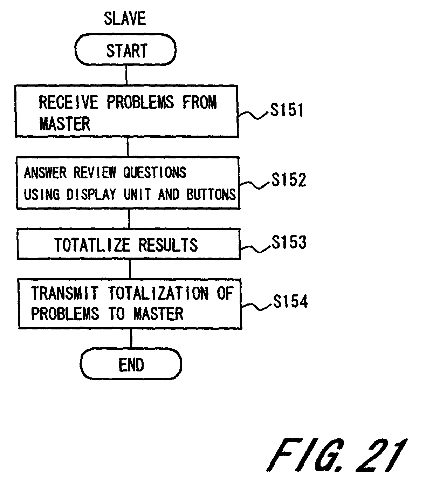

As illustrated in the flowchart of Fig. 21, the series of steps on the slave side includes receiving review problems from the master at the initial step S151, answering the problems using a display unit and buttons at step S152, totalizing the results of the answers at step S153 and transmitting the total of the problem score to the master at step S154. This series of steps is then exited.

Next, a series of steps in a case where the next lesson is created based upon the results of a review test and one day's problems are sent to the slave without giving lessons will be described with reference to flowcharts.

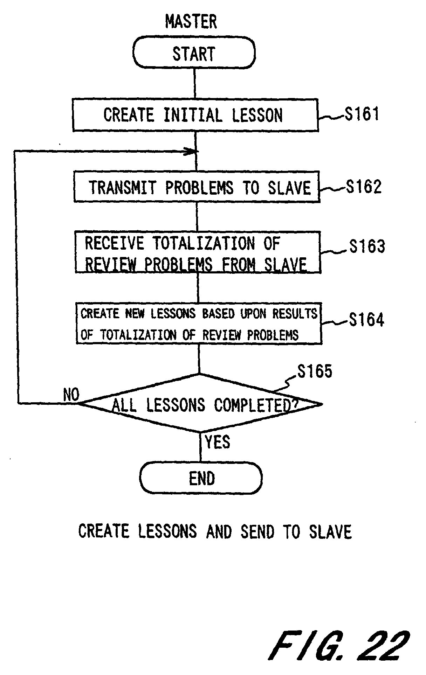

As shown in Fig. 22, the steps executed by the master include creating the content of initial lessons at an initial step S161, transmitting the problems to the slave at step S162, receiving results of totalization of practice problem scores at step S163 and creating new lessons based upon the results of totalizing of practice problem scores at step S164. Control then proceeds to step S165.

Processing branches at step S165 depending upon whether all lessons have been completed. A "NO" decision is rendered and control returns to step S161 if all lessons have not been completed, and a "YES" decision is rendered and this series of steps is concluded if all lessons have been completed.

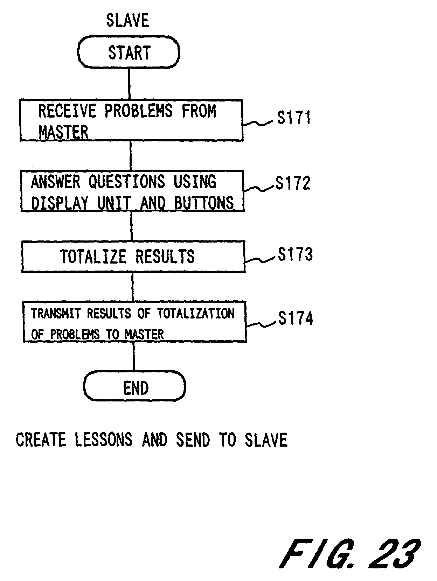

As illustrated in the flowchart of Fig. 23, the series of steps on the slave side includes receiving problems from the master at the initial step S171, answering the problems using a display unit and buttons at step S172, totalizing the results of the answers at step S173 and transmitting the total of the problem score to the master at step S174. This series of steps is then exited.

The learning tool described above is a portable tool for so-called computer aided education (CAE). Learning is performed using the education software of the master, and the program evaluates, from answers input by the user using the controller, the degree to which the content of study has been mastered and transfers important items to the slave. By carrying about the slave, the user can use the slave to place emphasis on studies in which he or she is weak.

For example, using software for the study of conversational English, the user can employ the master at home to automatically transfer vocabulary not known during studies to the slave, and the user may then carry the slave about instead of a wordbook.

Described next will be a portable map in which a map possessed by the slave is displayed on the display screen of the slave.

The portable map contains maps of actual towns stored on the CD-ROM of the master. While viewing a map using the television receiver of the master, the player manipulates a character to create "route data", namely data indicative of a route.

When this data is transmitted to the slave and the slave is detached from the master and carried about, routes can be reproduced by using the display unit and buttons of the slave. Further, by transmitting route data to another slave, one can teach another person the way to one's own home or the location of a meeting place.

The portable map will be described in detail with reference to the drawings.

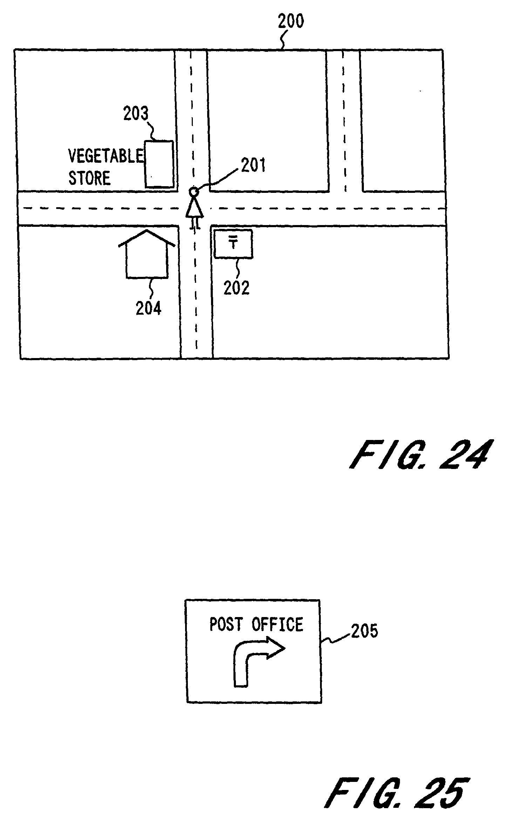

A map of the kind shown for example in Fig. 24 is displayed on the screen of the portable map. Specifically, an intersection is displayed approximately at the center of a display screen 200 in Fig. 24. A post office 202 is displayed at the lower right of the intersection, a vegetable store 203 at the upper left and a house 204 at the lower left. A character 201 is displayed at the approximate center of the intersection in Fig. 24.

If the user is aiming for post office 202 displayed in Fig. 24 and the character is located at the displayed intersection, then a display indicating the position of the post office appears as shown in Fig. 25.

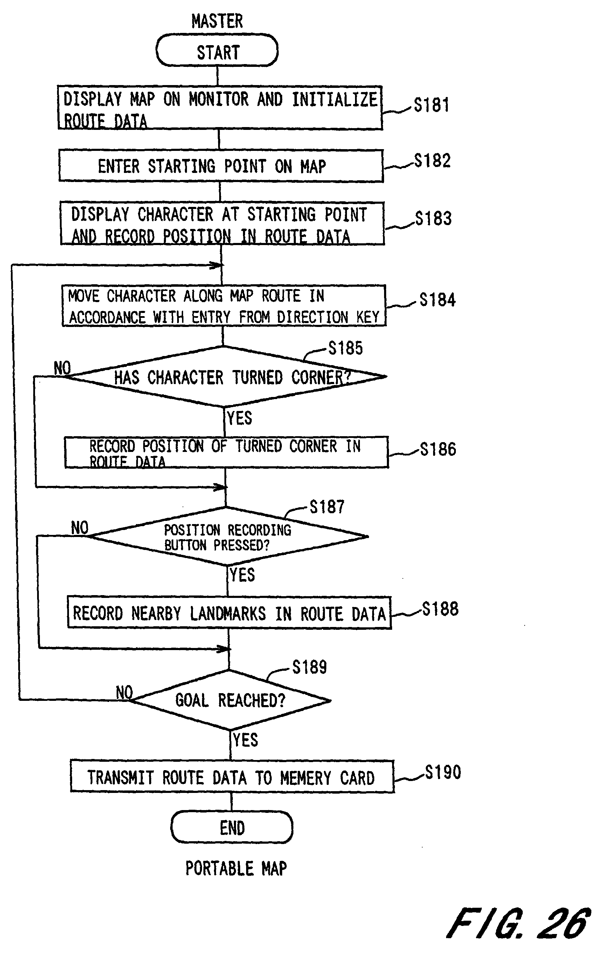

A series of steps related to the portable map will be described with reference to the flowchart shown in Fig. 26.

The master side first displays a map on the monitor and initializes the route data at step S181, enters a starting point on the map at step S182, displays a character at the starting point and records this position in route data at step S183 and moves the character in accordance with a road on the map in response to direction-key inputs at step S184. Control then proceeds to the next step S185.

Processing branches at step S185 depending upon whether the character has turned a corner. A "YES" decision is rendered and control proceeds to step S186 if the character has turned a corner, and a "NO" decision is rendered and control proceeds to step S187 if the character has not turned a corner.

The position of the corner is recorded in the route data at step S186 and control then proceeds to step S187.

Processing branches at step S187 depending upon whether a position storage button has been pressed. A "YES" decision is rendered and control proceeds to step S188 if the position storage button has been pressed, and a "NO" decision is rendered and control proceeds to step S189 if the position storage button has not been pressed.

Processing branches at step S189 depending upon whether the goal has been reached. A "YES" decision is rendered and control proceeds to step S190 if the goal has been reached, and a "NO" decision is rendered and control returns to step S184 if the goal has not been reached.

The route data is transmitted to a memory card at step S190 and this series of steps is exited.

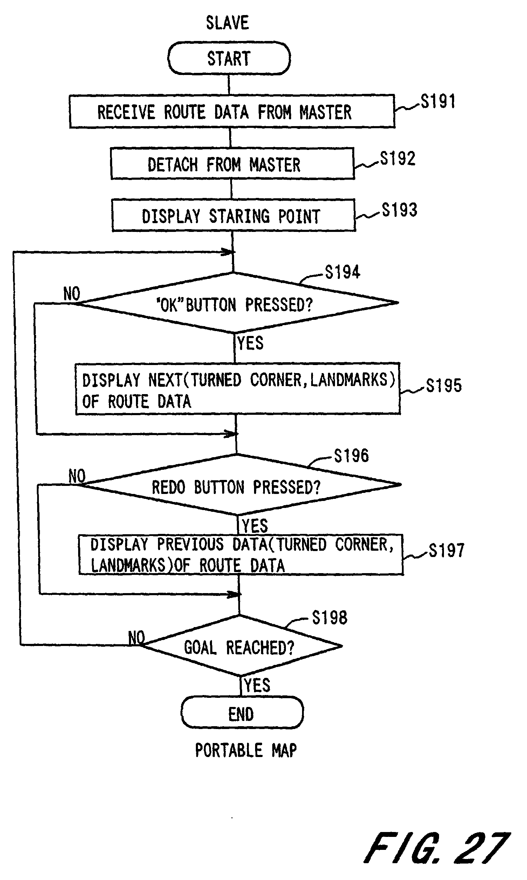

A series of steps of the flowchart executed by the slave will be described with reference to the flowchart of Fig 27.

The slave receives route data from the master at the initial step S191, the slave is detached from the master at step S192 and a starting point is displayed at step S193. Control then proceeds to step S194.

Processing branches at step S194 depending upon whether an "OK" button has been pressed. Specifically, a "YES" decision is rendered and control proceeds to step S195 if the "OK" button has been pressed, and a "NO" decision is rendered and control proceeds to step S196 if the "OK" button has not been pressed.

The next items of route data, namely corners and landmarks, are displayed at step S195. Control then proceeds to the next step S196.

Processing branches at step S196 depending upon whether a redo button has been pressed. That is, a "YES" decision is rendered and control proceeds to step S197 if the redo button has been pressed, and a "NO" decision is rendered and control proceeds to step S198 if the redo button has not been pressed.

The previous data of the route data, namely the previous corner and landmarks, is displayed at step S197. Control then proceeds to step S198.

Processing branches at step S198 depending upon whether the goal has been reached. That is, a "NO" decision is rendered and control returns to step S194 if the goal has not been reached, and a "YES" decision is rendered and this series of steps exited if the goal has been reached.

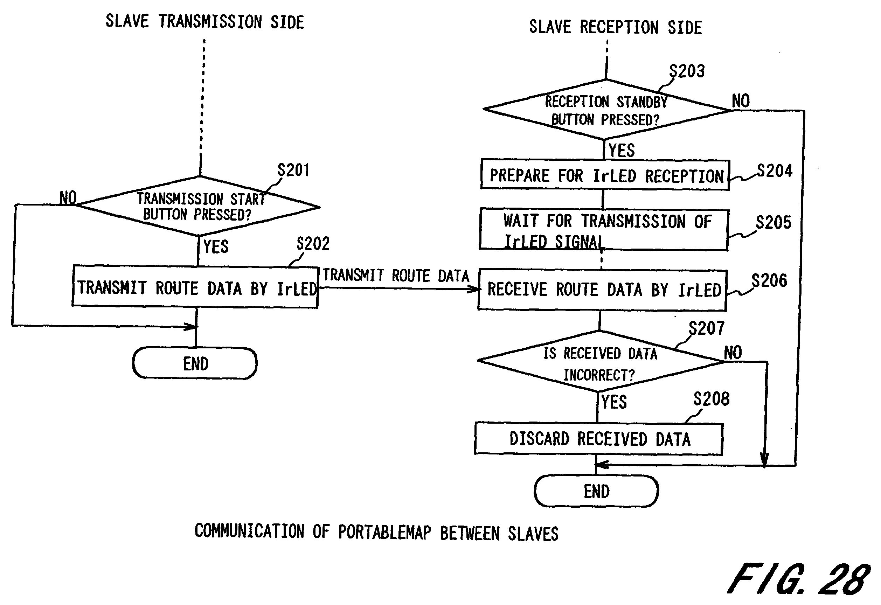

A series of steps for communication between a slave transmitting side and a slave receiving side will be described with reference to the flowchart shown in Fig. 28.

Processing on the slave transmitting side branches at step S201 depending upon whether a transmission start button has been pressed. Specifically, a "YES" decision is rendered and control proceeds to step S202 if the transmission start button has been pressed, and a "NO" decision is rendered and this series of steps is exited if the transmission start button has not been pressed.

Route data is transmitted to the slave receiving side by IrLED at step S202. This concludes this series of steps.

Processing on the slave transmitting side, on the other hand, branches at step S203 depending upon whether a reception standby button has been pressed. Specifically, a "YES" decision is rendered and control proceeds to step S204 if the reception standby button has been pressed, and a "NO" decision is rendered and this series of steps is exited if the reception standby button has not been pressed.

The receiving side prepares for IrLED reception at step S204, waits for transmission of an IrLED signal at step S205 and receives route data by IrLED at step S206. Control then proceeds to the next step S207.

Processing branches at step S207 depending upon whether the received data is incorrect. A "YES" decision is rendered and control proceeds to step S208 if the received data is incorrect, and a "NO" decision is rendered and this series of steps is exited if the received data is not incorrect.

The received data is discarded and this series of steps is exited at step S208.

The foregoing is a description of a portable map that uses a master and a slave. The portable map employs a master map that is placed in master or on a CD-ROM mounted in the master. The user transfers an outdoor location to the slave in advance and obtains geographical information via the display unit of the slave.

It should be noted that IrLED used in transferring information in this portable map is a standard of infrared signal transmission used as the signal medium of a so-called remote controller, which is a household electrical appliance. IrLED emits infrared radiation using an infrared LED and receives infrared radiation by using a photodiode. Pulse position modulation (PPM) is used at the method of modulation and use is made of a predetermined transmission code.

Selective transfer of attributes to another slave will be described next. A slave acquires attributes from the master in dependence upon the game signal. Attributes conforming to the progress of a game and saved as data in the slave can be selective transferred to another slave though the master.

Accordingly, it is possible to provide a password transfer function in which a transfer can be made only to a good friend, and control can be performed in such a manner that an exchange of characters between slaves cannot be carried out unless a certain game level has been achieved.

A series of steps regarding selective transfer on a per-slave basis will be described with reference to flowcharts.

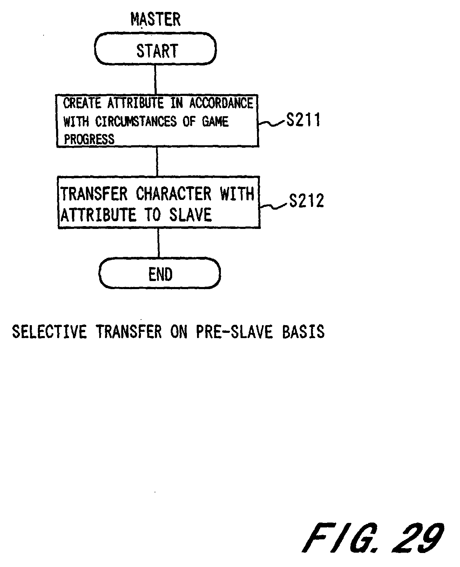

As shown by the flowchart of Fig. 29, the procedure on the master side includes creating an attribute at an initial step S211 based upon the circumstances of game progress, transferring a character with this attribute to a slave at the next step S212, and then exiting this series of steps.

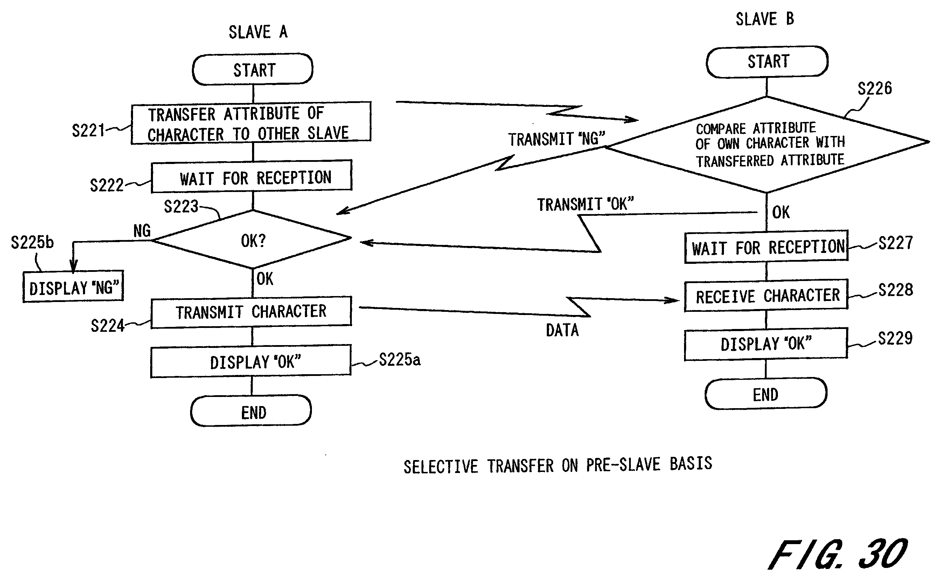

As shown by the flowchart of Fig. 30, the procedure executed by a slave A, which is one of the slaves, includes transferring the attribute of a character to another slave at an initial step S221 and then standing by for reception at step S222. Control then proceeds to step S223.

Processing branches at step S223 depending upon whether the received data is "OK". A "YES" decision is rendered and control proceeds to step S224 if the received data is "OK". If the received data is "NG", a "NO" decision is rendered and NG is displayed at step S225a, after which this series of steps is exited.

The character is transmitted to the other slave at step S224, "OK" is displayed at step S225a and then this series of steps is exited.

A procedure executed by a slave B, which is the other slave, will now be described. At the initial step S226, the attribute of a character transferred from the slave A is received and the slave B compares the transferred attribute with the attribute of its own character. When the attribute of slave B's own character matches the transferred attribute, an "OK" decision is rendered and control proceeds to step S227. In a case where the attribute of slave B's own character does not match the transferred attribute, a "NO" decision is rendered and "NG" is transmitted to the slave A.

The stave B stands by for reception at step S227, receives a character at step S228 and displays "OK" at step S229, after which this series of steps is exited.

Transfer of a high score from the master to slave will now be described. The high score of a game is transferred from the master to a slave so that the high score can be viewed from the display device of the slave. A high-core comparison can be made at school even if the master is not present.

A series of steps relating to transfer of a high score will be described with reference to flowcharts.

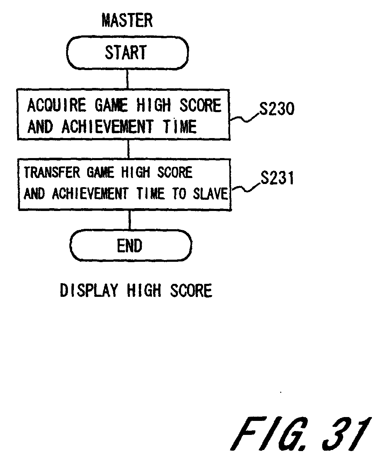

As shown in the flowchart of Fig. 31, the steps on the side of the master include acquiring the game high score and the time the high score was achieved at step S230 and transferring the high score and achievement time to the slave at step S231, after which this series of steps is exited.

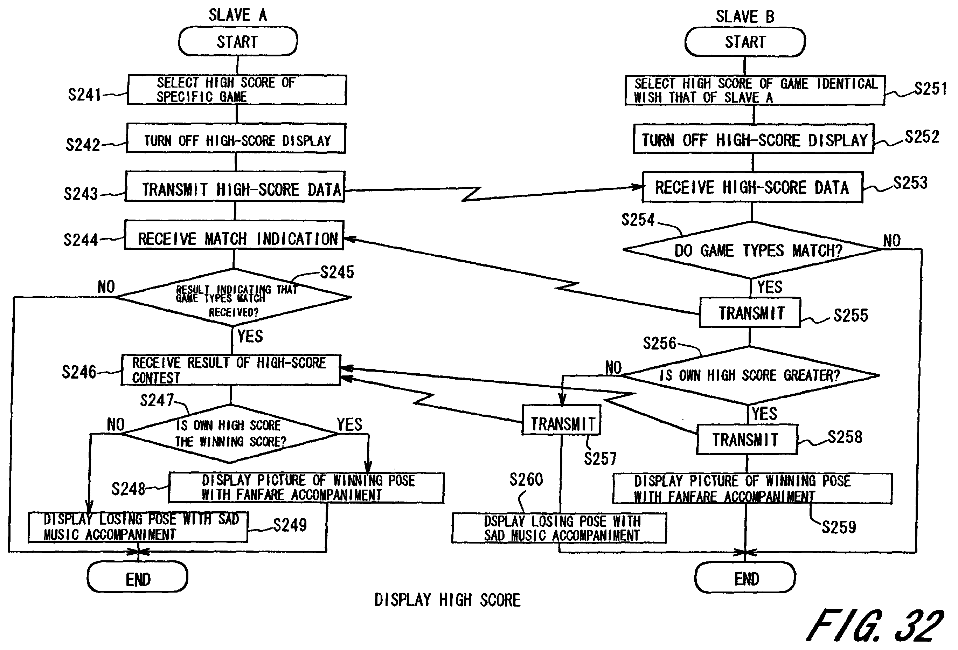

As shown in the flowchart of Fig. 32, the procedure on the side of a slave A, which is one of the slaves, include selecting the high score of a specific game at an initial step S241, turning off a high-score display at step S242, transmitting the high-score data to a slave B at step S243 and receiving a match indication from the slave B at step S244. Control then proceeds to step S245.

Processing branches at step S245 depending upon the result of matching of game types. That is, a "YES" decision is rendered and control proceeds to step S246 if the game types match, and a "NO" decision is rendered and this series of steps is exited if the game types do not match.

The slave A receives the result of high-score contest from the slave B at step S246. Control then proceeds to step S247.

Processing branches at step S247 depending upon whether the result of the high-score contest is that slave A has won. Specifically, a "YES" decision is rendered and control proceeds to step S248 if slave A has won, and a "NO" decision is rendered and control proceeds to step S249 if slave A has not won.

A picture of a victory pose is displayed with fanfare accompaniment at step S248. At step S249, on the other hand, a picture of a losing pose is displayed with accompaniment of sad music. This series of steps is exited following both steps S248 and S249.

Steps regarding the slave B, which is the other slave, include selecting the high score of a game the same as that of slave A at step S251, turning off a high-score display at step S252 and receiving high-score data from slave A at step S253. Control then proceeds to step S254.

Processing branches at step S254 depending upon whether the game types match. Specifically, a "YES" decision is rendered and control proceeds to step S255 if the game types match, and a "NO" decision is rendered and this series of steps is exited if the game types do not match.

The slave B transmits the match indication to the slave A at step S255 and processing branches at step S256 depending upon whether the high score is greater than its own high score. That is, a "YES" decision is rendered and control proceeds to step S258 if slave B's own high score is greater, and a "NO" decision is rendered and control proceeds to step S257 if slave B's high score is not greater.

The slave B transmits the result of the high-score contest to the slave A at both steps S257 and S258. Control proceeds from step S257 to step S260 and from step S258 to step S259.

A picture of a victory pose is displayed with fanfare accompaniment at step S259. At step S260, on the other hand, a picture of a losing pose is displayed with accompaniment of sad music. This series of steps is exited following both steps S259 and S260.

A method of implementing a selective exchange of characters has been described above. Specifically, data that has been saved in a slave through a master is selective transferred to another slave. This transfer makes it possible to transfer a character to a good friend only. Further, a password function can be provided, and control can be performed in such a manner that an exchange of characters between slaves cannot be carried out unless a certain game level has been achieved.

Described next will be a memory card having a time limit, wherein content that has been saved in a slave is erased unless a certain game objective is achieved in a specified period of time.

The memory card with the time limit makes use of the fact that the slave clock runs independently even after the slave is detached from the master.

A voice warning is issued from the speaker of the slave upon elapse of a fixed period of time from the last time data was saved. Examples of the voice warning are "Please continue soon" and "There is data that has not been used in six months. Do you want to delete it?", etc.

A series of steps regarding this memory card with a time limit will be described with reference to flowcharts.

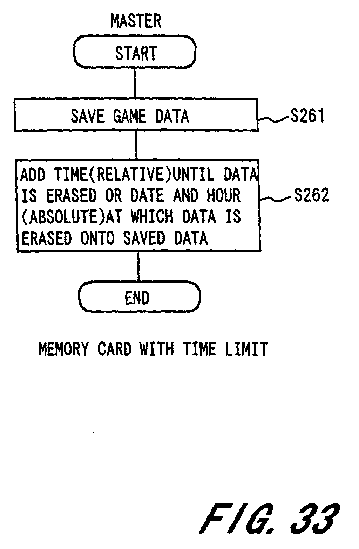

As shown in the flowchart of Fig. 33, steps on the master side include saving game data at an initial step S261 and adding length of time (relative) until data is erased or time (absolute) at which data is erased onto the saved data at step S262, after which this series of steps is exited.

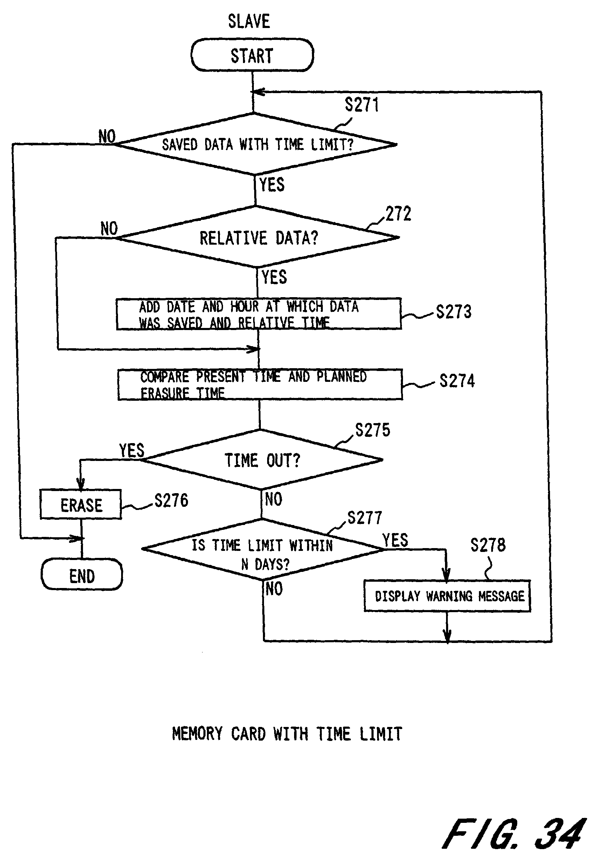

In regard to steps on the slave side, as shown in the flowchart of Fig. 34, processing branches at step S271 depending upon whether saved data having a time limit exists. A "YES" decision is rendered and control proceeds to step S272 if saved data having a time limit exists, and a "NO" decision is rendered and this series of steps is exited if saved data having a time limit does not exist.

Processing branches at step S272 depending upon whether relative data exists. Specifically, a "YES" decision is rendered and control proceeds to step S273 if relative data exists, and a "NO" decision is rendered and control proceeds to step S274 if relative data does not exist.

The time at which data was saved and relative time are added at step S273, the present time and planned erasure time are compared at step S274 and control proceeds to step S275.

Processing branches at step S275 in regard to whether time has run out. A "YES" decision is rendered and control proceeds to step S276 if time has run out, and a "NO" decision is rendered and control proceeds to step S277 if time has not run out.

Erasure is performed at step S276, after which this series of steps is exited.

Processing branches at step S277 depending upon whether the time limit is within n days. A "YES" decision is rendered and control proceeds to step S278 if the time limit is within n days, and a "NO" decision is rendered and control proceeds to step S271 if the time limit is not within n days.

A warning message is displayed at step S278 and control proceeds to step S271.

The setting of an ID in a slave will be described next. The ID setting involves having the user set any ID one time only after purchasing the slave. The user is identified by transmitting this ID.

More specifically, when communication takes place between a master and a slave or between slaves, an ID number for individual identification is required.

In a case where a hardware-specific ID has not been set in a slave at the time of shipping from the factory, therefore, the user sets any name in the slave upon purchasing the slave and introducing power to it for the first time.

The set ID can be utilized as the name of the character that appears in a game or for player identification purposes in games where a large number of persons participate. In addition, a destination can be surmised by name when communication between slaves takes place.

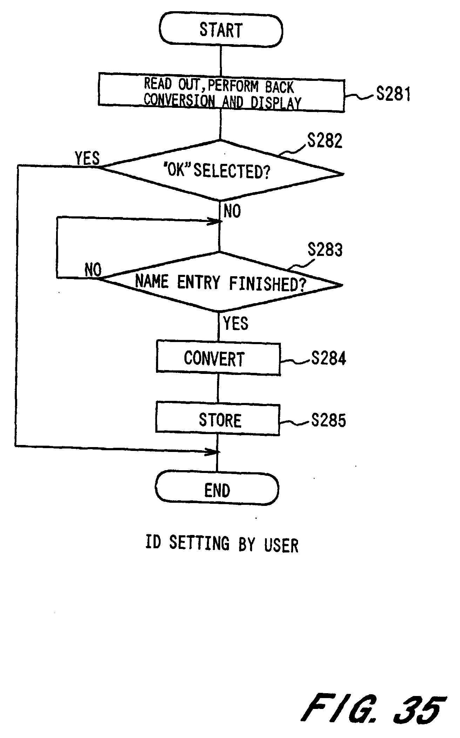

The setting of an ID will be described with reference to a flowchart shown in Fig. 35.

Readout, back conversion and display are performed at an initial step S281 and control then proceeds to step S282.

Processing branches at step S282 depending upon whether "OK" has been selected. That is, a "YES" decision is rendered and this series of steps exited if "OK" has been selected, and a "NO" decision is rendered and control proceeds to step S283 if "OK" has not been selected.

Processing branches at step S283 depending upon whether entry of a name has been completed. A "NO" decision is rendered and control returns to step S283 if entry of a name has not been completed, and a "YES" decision is rendered and control proceeds to step S284 if entry of a name has been completed.

The name that has been entered is subjected to a fixed conversion at step S284, the converted name is stored at step S285 and this series of steps is then exited.

A slave has a display screen 300 illustrated in Fig. 36. Upper-case characters "ABC···" of the English alphabet are displayed at the bottom of the display screen. The user can enter a character string by selecting desired characters from these letters of the alphabet using a highlighted display 303. A selected character "D" is being displayed at the upper left of the display screen.

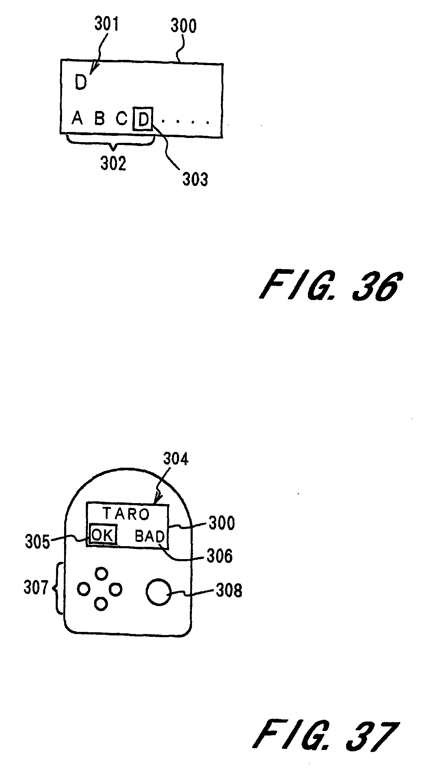

Fig. 37 schematically illustrates the entirety of a slave having the display screen 300, which is displaying a name. This slave has the substantially rectangular display screen 300 on the upper portion main side, cursor keys 307 on the lower left side, and an ENTER key 308 on the lower right side.

The name "TARO" is being displayed at the top of the display screen 300, "OK" on the left side below the name, and "BAD" on the right side below the name. The user selects either "OK" or "BAD" in a highlighted display of the display screen 300 using the cursor keys 307 and then presses the ENTER key 308 to make an input.

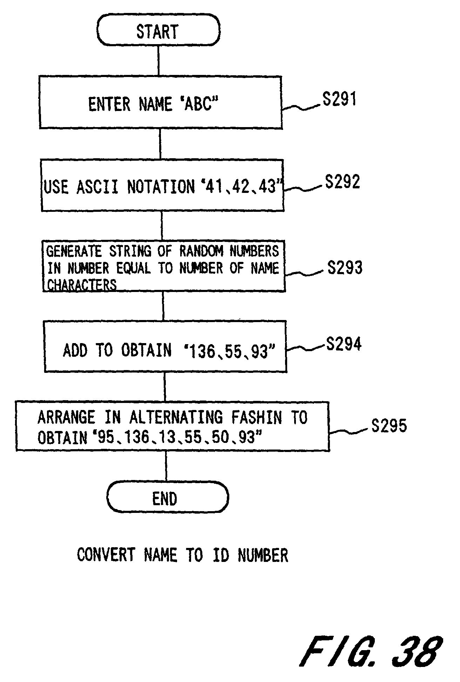

A series of steps for converting an entered name to an ID number will now be described with reference to a flowchart shown in Fig. 38.

A name is entered at an initial step S291. The name "ABC" is entered here. Control then proceeds to the next step S292.

The entered name "ABC" is displayed as an ASCII code at step S292. The entered name "ABC" becomes "41, 42, 43" in terms of ASCII codes. Control then proceeds to step S293.

A string of random numbers the number of which is the same as that of the characters in the name is generated at step S293. Here "95, 13, 50" are obtained as an example of the string of random numbers. Control then proceeds to step S294.

The entered character string "41, 42, 43" in ASCII form and the string of random numbers the number of which is the same as that of the characters in the name are added at step S294. Here "136, 55, 93" are obtained as the result of addition. Control then proceeds to step S294.

The numbers in the string of random numbers "95, 13, 50" the number of which is the same as that of the characters in the name and the numbers in the string of numerals "136, 55, 93" obtained by addition are arranged in alternating fashion at step S294. The number string "95, 136, 13, 55, 50, 93" is obtained. This series of steps is then exited.

As set forth above, this ID setting is an interface through which the user is capable of entering an ID by inputting a name in the slave the first time only after purchasing the slave, the name then being converted to an ID and stored. Setting such an ID makes it possible to initially assign a pet name to the slave. The ID can be used allow or forbid communication between slaves.

A multiple-participant first-to-respond game utilizing slaves will be described next. A multiple-participant first-to-respond game is a game played by a number of participants. The plurality of players start the game at the same time using miniature game machines in their possession, and the sooner the game is completed, the higher the points won.

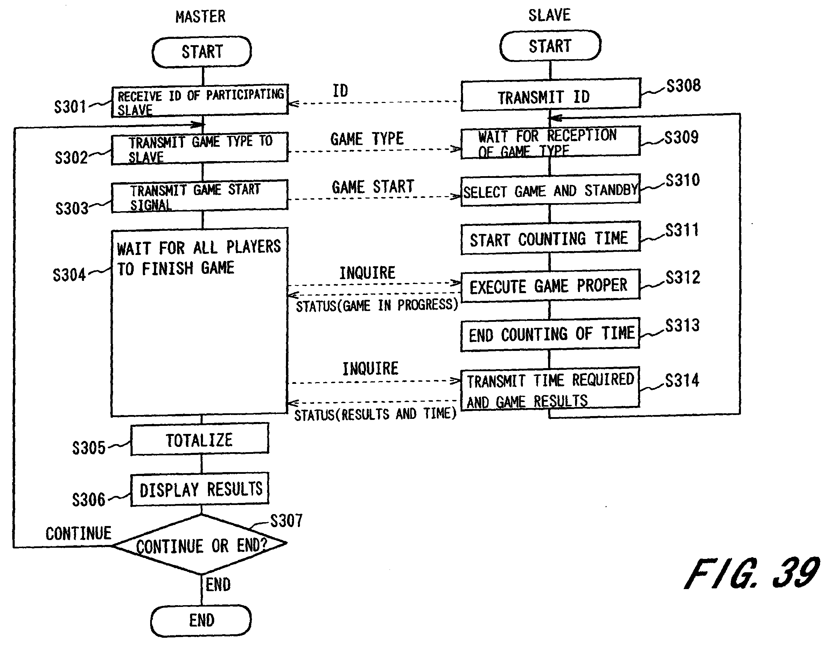

The flow of processing executed by the master and by the slave, as well as the content of communication between the master and the slave, will be described with reference to a flowchart shown in Fig. 39.

The steps on the master side include receiving the IDs of the participating slave at an initial step S301, transmitting game type to the slave at step S302, transmitting a game start signal to the slave at step S303, waiting for all players to finish the game at step S304 by making an inquiry regarding execution of the game proper by the slave and obtaining status of the game, totalizing the game results at step S305 and displaying the results of game totalization at step S306. Control then proceeds to step S307.

A selection as to whether the game is to be continued or terminated is made at step S307. If the game is to be continued, a "continue" decision is rendered and control returns to step S302. If the game is terminated, this series of steps is exited.

Steps on the slave side include transmitting an ID to the master at an initial step S308, waiting for reception of game type from the master at step S309, selecting the game and standing by at step S310 in regard to communication of game start from the master, starting the counting of time at step S311, executing the game proper and sending back status at step S312 in response to the inquiry from the master issued at step S304, terminating the counting of time at step S313, and transmitting status regarding time required and transmission of game results at step S314 in response to the inquiry from the master. Control then returns to step S309.

What is described above is a party game, namely a first-to-respond game. The first-to-respond game comprises a plurality of slaves and one master and a game response is made by manipulating a slave.

The master checks the signals and IDs from the slaves and adds a point to a slave that has answered first by sending a signal. By totalizing the times at which a plurality of users complete their games using their slaves, a first-to-complete game is implemented. Since this game is played using the slaves, it can be utilized as a minigame or the like.

Described next will be a game which is run in operative association with a household air conditioner or the like through IrLED using a slave linked to a game run by the master.

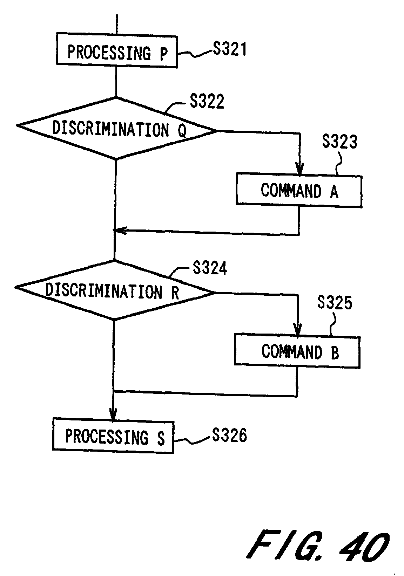

This realistic game is enjoyed at one's home. As shown in Fig. 40, the master sends a slave a command message that conforms to the status of a game.

More specifically, in the flowchart of Fig. 40, a discrimination Q is made at step S322, which follows processing P at step S321. Depending upon the discrimination Q made, control proceeds to a command A at step S323 or to discrimination R at step S324. If control proceeds to step S323, control proceeds to step S324 after command A is executed.

Depending upon the discrimination made at step S324, control proceeds to a command B at step S325 or to processing S at step S326. If control proceeds to step S325, command B is executed.

The slave refers to an IrLED command table that has been registered in advance and issues the registered IrLED command if issue time is zero. If issue time has been set, a time obtained by adding the issue time to the real time is registered in the command table together with the IrLED issue command. This registration is carried out by sorting in order of time.

A command generation program on the slave side will be described with reference to a flowchart.

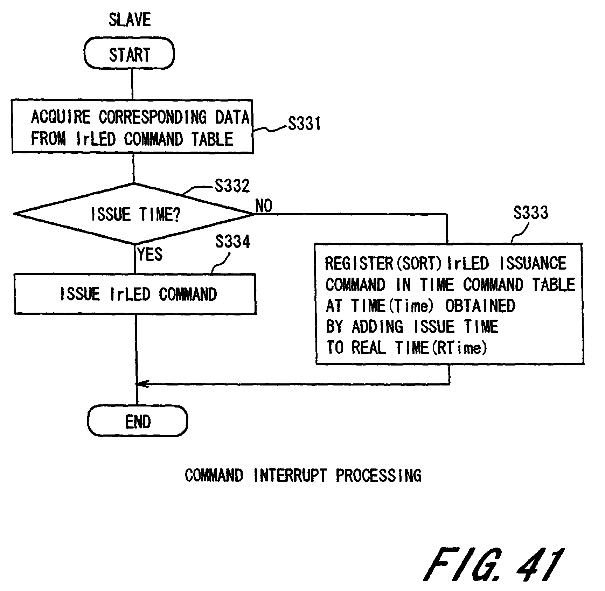

Command interrupt processing will be described. As shown in the flowchart of Fig. 41, corresponding data is acquired from the IrLED command table at an initial step S331 and processing branches at the next step S332 in conformity with "Issue Time", which is the time at which the command is issued. That is, if the condition "Issue Time = 0" is satisfied, a "YES" decision is rendered and control proceeds to step S334. If this condition is not satisfied, a "NO" decision is rendered and control proceeds to step S333.

The IrLED command is registered (sorted) in a time-limit command table at a time (Time) obtained by adding "Issue Time" to real time (RTime) at step S333. This series of steps is then exited.

The IrLED command is issued at step S334, after which this series of steps is exited.

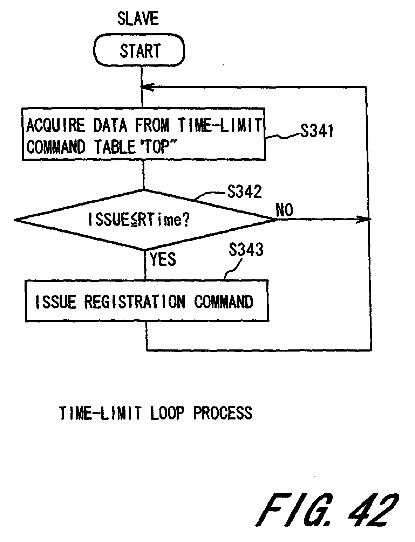

Here time-limit loop processing will be described. As shown in Fig. 42, data is acquired from a time-limit command table Top at an initial step S341, and processing branches at the next step S342 in regard to the condition "Time ≦ RTime". That is, a "YES" decision is rendered and control proceeds to step S343 if this condition is satisfied. Control returns to step S341 if this condition is not satisfied.

A registration command is issued at step S343. Control then returns to step S341.

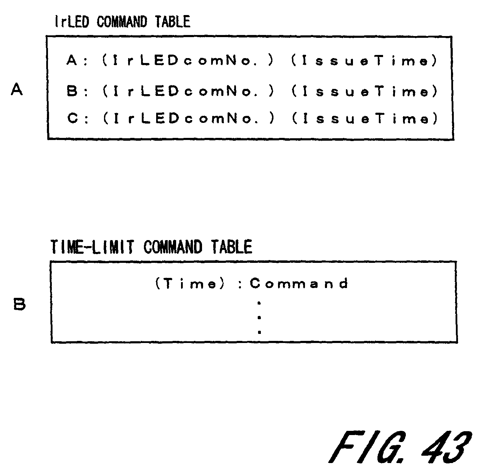

The IrLED command table is constructed from (IrLED com No.) (Issue Time) in regard to command A, as shown at A in Fig. 43. Similarly, the IrLED command table is constructed from (IrLED com No.) (Issue Time) in regard to command B and from (IrLED com No.) (Issue Time) in regard to command C.

The time-limit command table is constructed using (Time):Command as the constituent units, as shown at B in Fig. 43.

The registration of the IrLED command table is carried out as set forth below. First, the IrLED command data is acquired. The acquisition of the IrLED command data involves acquiring data from a database in a CD-ROM such as a game CD or special-purpose database CD, and a selection can be made from manufacturer, machine model and command. Further, the acquisition of IrLED data can be made by selection directly from a corresponding remote controller in response to a learning remote controller mode.

Next, in regard to correlation with command messages, IrLED command patterns acquired by the above-described technique in the game program of the master and command messages can be correlated by user operation or by an automatic setting program. In a case where the acquisition of the IrLED command data is B, the data is uploaded from the slave, a correlation is made and then this is downloaded.

Further, in regard to correlation with command messages, correlation between game command messages and IrLED command data is performed by a correlation program downloaded from the master to the slave. Data acquisition of the learning remote controller is performed while correlation with the game command messages is made by this method.

In accordance with the game, control of air conditioning and illumination can be carried out depending upon the game status, and the power supply can be turned off by a time-limit command after the game ends.

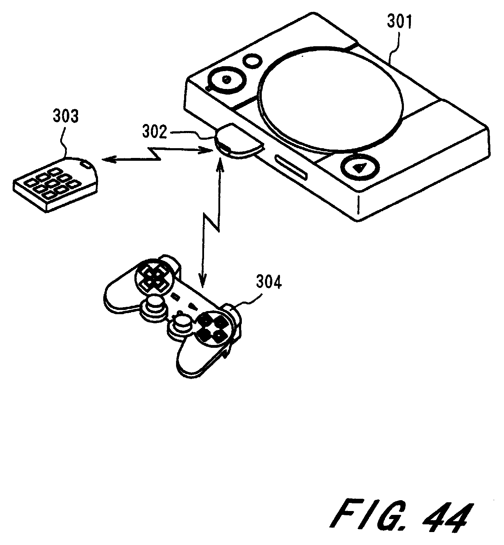

An example of a mode in which operation is performed at a slave in accordance with commands will be described with reference to Fig. 44. Here, with a slave 302 inserted into a master 301, an IrLED signal from an ordinary remote controller 303 or game controller 304 is received.

The game described above is run in operative association with a household air conditioner or the like through IrLED of a slave linked to a game run by the master.

The game is run in operative association with a household air conditioner or the like through IrLED of a slave linked to a game run by the master or to a role-playing game such as an adventure game. This makes it possible to enjoy a realistic game at home.

Described next will be an artificial-life game in which an IrLED signal such as an infrared signal from the remote controller of a domestic television receiver or air conditioner is received and artificial life is grown in dependence upon the signal.

In this artificial-life game, the way artificial life is raised changes when TV channels are switched among frequently. The way artificial life is raised changes also depending upon the TV manufacturer.

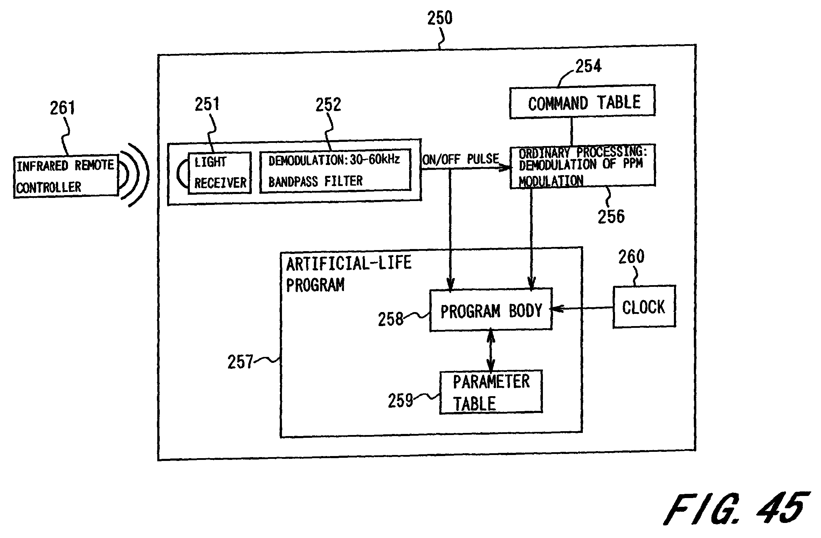

This artificial-life game will be described with reference to the block diagram shown in Fig. 45.

A slave that runs the artificial-life game comprises a light receiver 251 for receiving an infrared communication in accordance with the IrLED standard from an external infrared remote controller 261, a demodulator & bandpass filter 252 constructed as an integral part of the light receiver 251, a PPM modulation demodulator 256 to which on/off pulses from the demodulator & bandpass filter 252 are input, and a command table 254 referred to by the demodulator 256 for pulse-position modulation (PPM) communication.

The light receiver 251 is a light-receiving element which receives infrared light in accordance with the IrLED standard from the external infrared remote controller 261 and converts the infrared light to an electric current. The demodulator & bandpass filter 252 comprises a demodulator for demodulating the signal obtained by IrLED light reception at the light receiver 251, and a filter for selectively passing signals having a bandwidth of 30 to 60 kHz.

The PPM modulation demodulator 256 is a circuit which, in case of ordinary processing, demodulates a PPM signal comprising the on/off pulses from the demodulator & bandpass filter 252.

A command table 254 stores commands referred to when a signal is demodulated by the PPM modulation demodulator 256.

Further, the slave has an artificial-life program 257 associated with the received infrared light in accordance with the IrLED standard received from the external infrared remote controller 261, and a clock 260.

The artificial-life program 257 has a program body 258, which is the execution portion of the artificial-life program, and a parameter table 259, which stores parameters referred to by the program body 258 whenever necessary.

The clock generates a clock signal at a fixed period. The clock signal is supplied to the program body and serves as a reference for program execution timing.

Ordinary processing for receiving a signal from the infrared remote controller includes receiving the infrared signal, which has been modulated by a carrier frequency of 30 to 60 kHz, by the light receiver and modulating the signal to on/off pulses by the bandpass filter.

An infrared remote controller for home use employs PPM modulation based upon IrLED. Usually the infrared remote controller compares these on/off pulses with data in the command table and decodes them to a command. In terms of artificial life, the on/off pulses are used as food, captured as the outside environment and employed as parameters of the growth program.

Here an example of correspondence with the parameters of the artificial-life growth program is illustrated. The example of correspondence involves counting up a nutrition parameter by on/off pulses, counting down a nutrition parameter by an internal clock, counting a state-of-health parameter up/down by a specific command, and counting the state-of-health parameter up/down by a specific pulse pattern.

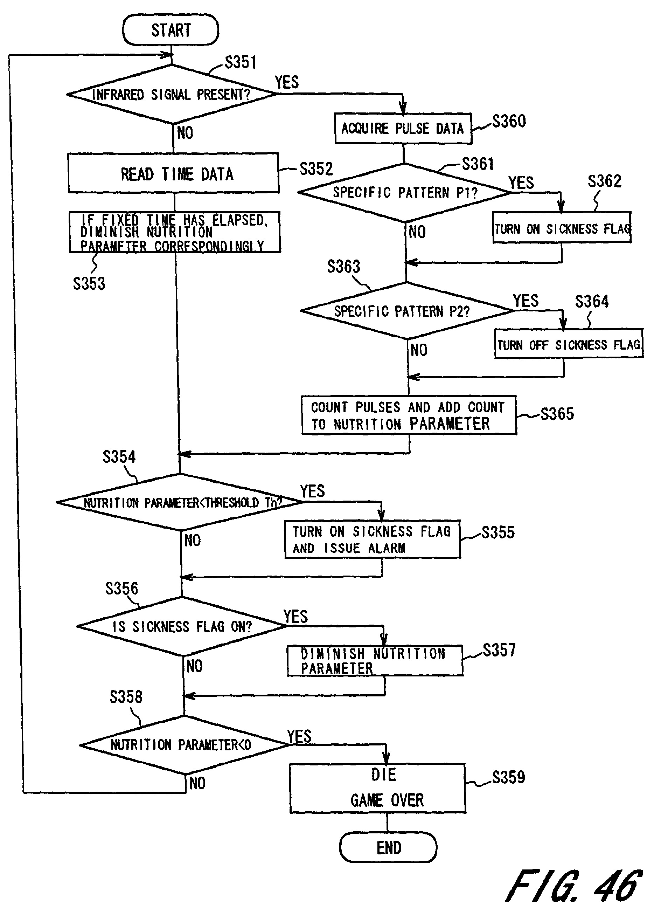

A series of steps of the artificial-life game will be described with reference to a flowchart shown in Fig. 46.

Processing branches at an initial step S351 depending upon the presence or absence of an infrared signal. Specifically, a "YES" decision is rendered and control proceeds to step S360 if an infrared signal is present, and a "NO" decision is rendered and control proceeds to step S352 if an infrared signal is absent.

Pulse data is acquired at step S360 and processing branches at step S361 depending upon whether the pulse data matches a specific pattern P1. Specifically, a "YES" decision is rendered and control proceeds to step S362 if the pulse data matches the specific pattern P1, and a "NO" decision is rendered and control proceeds to step S363 if the pulse data does not match the specific pattern P1.

A sickness flag is turned on at step S362 and control proceeds to the next step S363.

Processing branches at step S363 depending upon whether the pulse data matches a specific pattern P2. Specifically, a "YES" decision is rendered and control proceeds to step S364 if the pulse data matches the specific pattern P2, and a "NO" decision is rendered and control proceeds to step S365 if the pulse data does not match the specific pattern P2.

The sickness flag is turned off at step S364 and control proceeds to the next step S365.

Pulses are counted and the nutrition parameter is added to the value of the count at step S365, after which control proceeds to the next step S354.

Processing branches at step S354 depending upon whether the condition "nutrition parameter < threshold Th" is satisfied. Specifically, a "YES" decision is rendered and control proceeds to step S355 if the condition is satisfied, and a "NO" decision is rendered and control proceeds to step S356 if the condition is not satisfied.

The sickness flag is turned on and an alarm is issued at step S355. Control then proceeds to the next step S356.

Processing branches at step S356 depending upon whether the sickness flag is on. Specifically, control proceeds to step S357 if the sickness flag is ON and to step S358 if the sickness flag is not ON.

The nutrition parameter is diminished at step S357 and control then proceeds to the next step S358.

Processing branches at step S358 depending upon whether the condition "nutrition parameter < 0" is satisfied. Specifically, a "YES" decision is rendered and control proceeds to step S359 if the condition is satisfied, and a "NO" decision is rendered and control returns to step S351 if the condition is not satisfied.

The character dies and the game ends ("GAME OVER") at step S359. This series of game steps is then exited.

Thus, as described above, the game is an artificial-life game in which an indoor IrLED signal, i.e., an infrared remote-controller signal, is received and artificial life is grown in dependence upon the signal.

More specifically, according to the artificial-life game, an infrared remote-controller signal for controlling a household electrical appliance such as an air conditioner, fan or TV is received and artificial life grows in dependence upon the infrared signal. For example, when TV channels are switched among frequently, the way artificial life is raised changes. The way artificial life is raised changes also depending upon the TV manufacturer.

A game in which an artificial conversation is carried out among a plurality of slaves and between a master and a slave will be described next. In this game an IrLED signal is sent from a slave A to a slave B in dependence upon the key operation sequence of the slave A, and the slave B converses using the corresponding voice pattern, i.e., issues the voice pattern from its speaker.

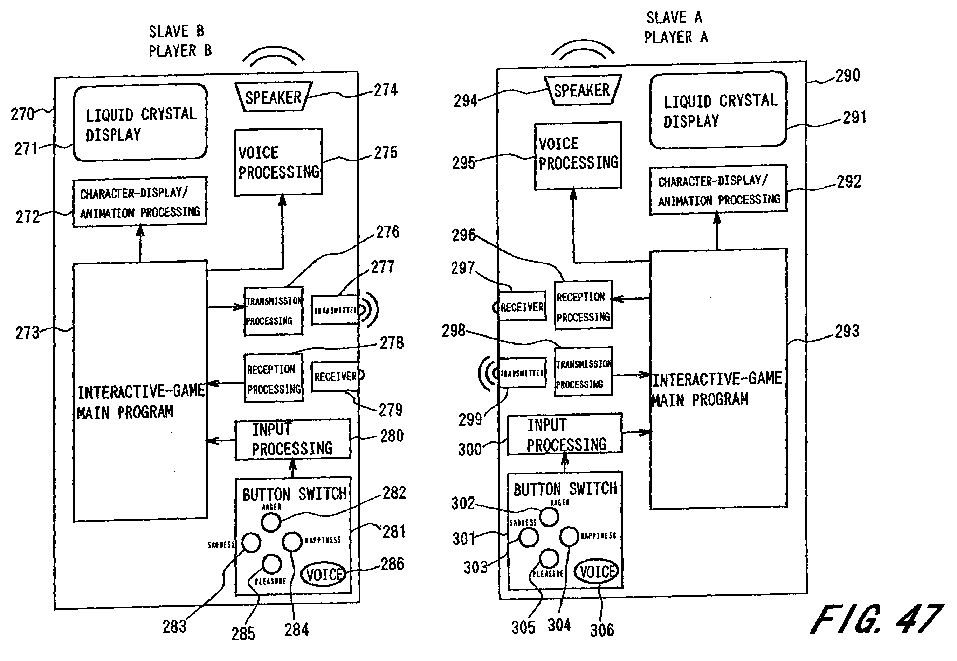

Interaction between the slaves of two players, namely the basic configuration of this interactive game, will be described with reference to Fig. 47.

The slave A used by a player A has a speaker 294 for outputting voice, a liquid crystal display 291 for displaying characters and images, a voice generating processor 295 for creating a voice signal applied to the speaker 294, and a character-display/animation processing circuit 292 which drives the liquid crystal display.

The speaker 294 is a voice output unit for outputting as voice a voice signal provided by the voice generating processor 295.

The voice generating processor 295 subjects an applied signal to processing needed to drive the speaker 294 and then applies the processed signal to the speaker 294.

The character-display/animation processing circuit 292 subjects an applied signal to processing needed to drive the liquid crystal display 291 and then applies the processed signal to the liquid crystal display 291.

The slave A further includes a receiver 297 for receiving externally applied infrared radiation in accordance with the IrLED standard, a reception processor 296 for processing the signal from the receiver 297, a transmitter 299 for externally issuing infrared radiation in accordance with the IrLED standard, and a transmission processor 298 for applying processing to a signal applied to the transmitter 299.

The receiver 297 has a light receiving element to receive externally applied infrared radiation in accordance with IrLED to convert it to current. The reception processor 296 receives a photo-electric converted signal with the receiver to apply a prescribed processing to it.

The transmission processor 298 subjects the signal issued by the slave A to a prescribed conversion and then applies the signal to the transmitter 299. The transmitter 299 externally transmits infrared radiation in accordance with the IrLED standard based upon the signal from the transmission processor 298.

The slave A further includes a button switch unit 301 having a plurality of switches, and an input processor 300 for processing an input from the button switch unit 301. The button switch unit 301 has an "anger" switch 302, a "sadness" switch 303, a "pleasure" switch 305, a "happiness" switch 304 and a "voice" switch 306, which corresponds to voice generation. The switches 302 to 306 accept inputs by being pushed by the user.

The operating elements 121 correspond to these "happiness", "anger", "sadness" and "pleasure" button-type switches, and the operating element 122 corresponds to the "voice" button-type switch.

The input processor 300 applies prescribed processing to content that has been entered by the button switch unit 301.

The slave A has an interactive-game main program 293, which is the body that executes the interactive game.

The interactive-game main program 293 controls each component of the slave A, when interactive-game is executed. More specifically, the program outputs signals to the generating processor 295, character-display/animation processing circuit 292 and transmission processor 298. Conversely, signals from the reception processor 296 and button switch unit 301 are applied to the program.

The slave B in which the interactive game is run with slave A as the other party will be described next. Since the slave B is constructed in a manner similar to that of slave A described above, its construction will be touched upon in brief.

The slave B used by a player B has a speaker 274 for outputting voice, a generating processor 275 for driving the speaker 274, a liquid crystal display 271 for displaying characters and images, and a character-display/animation processing circuit 272 which drives the liquid crystal display.

The slave B further includes a transmitter 277 for externally issuing infrared radiation in accordance with the IrLED standard, a transmission processor 276 for applying prescribed processing to a signal applied to the transmitter 277, a receiver 279 for receiving externally applied infrared radiation in accordance with the IrLED standard, and a reception processor 278 for applying prescribed processing to the signal from the receiver 279.

The slave B further includes a button switch unit 281, which has an "anger" button 282, a "sadness" button 283, a "pleasure" button 285, a "happiness" button 284 and a "vocalization" button 286, and an input processor 280 for applying prescribed processing to signals from the button switch 281.

The operating elements 121 correspond to these "happiness", "anger", "sadness" and "pleasure" switches, and the operating element 122 corresponds to the "voice" switch.

The slave B has an interactive-game main program 273, which is the body that executes the interactive game. The interactive-game main program 273 outputs signals to the generating processor 275, character-display/animation processing circuit 272 and transmission processor 276. Signals from the reception processor 278 and input processor 280 are applied to the program.

The slaves A 290 and B 270 are utilized together in the interactive game. That is, infrared radiation in accordance with the IrLED standard from the transmitter 299 of slave A are received by the receiver 277 of slave B, and infrared radiation in accordance with the IrLED standard from the transmitter 279 of slave B are received by the receiver 297 of slave A.

The interactive game has the construction described above. Specifically, the interactive game has voice button switches corresponding to the emotions of happiness, anger, sadness and pleasure, and voice generation processing corresponding to these emotions of happiness, anger, sadness and pleasure is executed.

The following can be mentioned as an example of mapping to voice signals indicative of happiness, anger, sadness and pleasure:

"Happiness" corresponds to a loud, high-pitch sound the envelope of which is somewhat large. "Anger" corresponds to a loud, low-pitch sound the envelope of which is somewhat large. "Sadness" corresponds to a quiet, high-pitch sound having a somewhat attenuated envelope, and "pleasure" corresponds to a quite, low-pitch sound having a somewhat diminished envelope.

Ten to several dozen words are produced by simple key-operation patterns such as Morse-signal patterns. Simple emoticons and expressive words corresponding to these emotions are displayed at the same time.

Examples of the emoticons that can be mentioned are a heart shape, a lightening bolt, smoke, an exclamation mark and a question mark.

In this interactive game, the state of reception, namely whether the interactive state is on or off, is expressed by the appearance/exit of characters and by vocalized animation. New words or names are registered. Words are generated and verified by the button switches and then transferred by the voice button.

This interactive game is so configured that two individuals can play using two slaves, one individual can play in interaction with an artificial character using the master, and a number of individuals can play online using the communication function of the master.

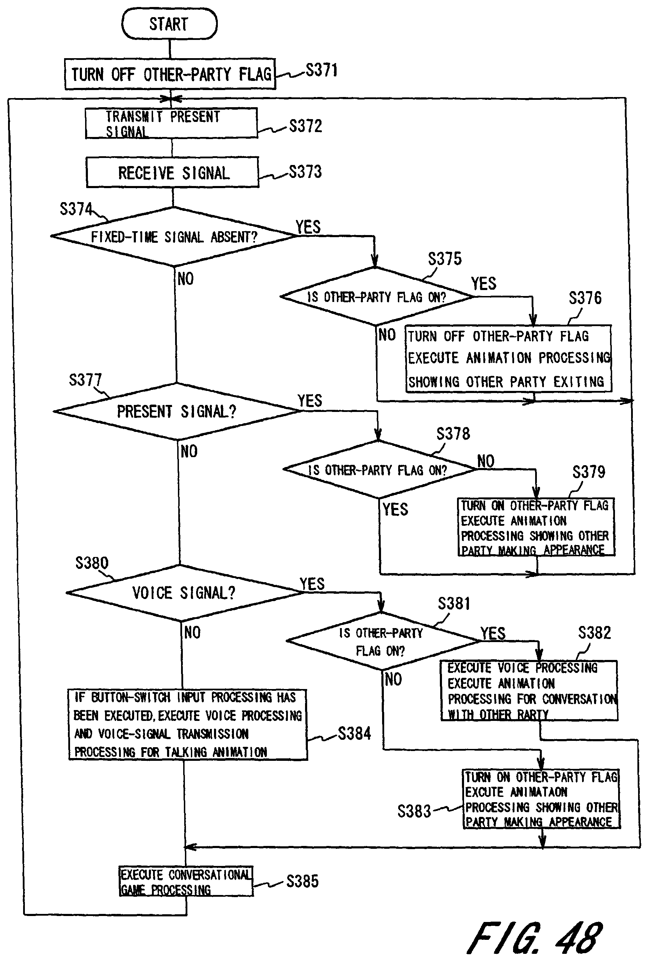

A series of steps of the interactive game will be described with reference to a flowchart shown in Fig. 48.

A flag indicative of another party is turned off at an initial step S371, a existence or present signal is transmitted at step S372, and a signal is received at step S373. Control then proceeds to step S374.

Processing branches at an initial step S374 in regard to whether a constant- or fixed-time signal is absent. Specifically, a "YES" decision is rendered and control proceeds to step S375 if there is no constant-time signal, and a "NO" decision is rendered and control proceeds to step S377 if there is a constant-time signal.

Processing branches at step S375 depending upon whether the flag indicative of the other party is on. Specifically, a "YES" decision is rendered and control proceeds to step S376 if the other-party flag is on, and a "NO" decision is rendered and control returns to step S372 if the other-party flag is not on.

The other-party flag is turned off and an animation showing the other party exiting is displayed at step S376. Control then returns to step S373.

Processing branches at step S377 depending upon whether the present signal is present. Specifically, a "YES" decision is rendered and control proceeds to step S378 if the present signal is present, and a "NO" decision is rendered and control proceeds to step S380 if the present signal is not present.

Processing branches at step S378 depending upon whether the flag indicative of the other party is on. Specifically, a "YES" decision is rendered and control proceeds to step S372 if the other-party flag is on, and a "NO" decision is rendered and control proceeds to step S379 if the other-party flag is not on.

The other-party flag is turned on and animation processing for appearance of the other party is executed at step S379. Control then return to step S372.

Processing branches at step S380 depending upon the presence or absence of a voice signal. Specifically, a "YES" decision is rendered and control proceeds to step S381 if a voice signal is present, and a "NO" decision is rendered and control proceeds to step S384 is a voice signal is not present.

Processing branches at step S381 depending upon whether the flag indicative of the other party is on. Specifically, a "YES" decision is rendered and control proceeds to step S382 if the other-party flag is on, and a "NO" decision is rendered and control proceeds to step S383 if the other-party flag is not on.

Voice processing is executed and animation processing for conversation with the other party is executed at step S382. The other-party flag is turned on, animation for appearance of the other party is executed and so is voice processing at step S383. Control proceeds to step S385 from both step S382 and step S383.

If button-switch input processing is executed at step S384, voice signal processing is executed as well as voice-signal transmission processing for talking animation. Control then proceeds to step S385.

Conversational game processing is executed at step S385, after which control returns to step S372. The game described above is one in which an artificial conversation is carried

out among a plurality of slaves. An IrLED signal is sent to slave B in dependence upon the key-operation sequence of slave A, and slave B converses using the corresponding voice pattern.

Described next will be a passport as well as a common currency between games, in which a game program that has been loaded in a master transfers specific information to a slave and the information is capable of being verified from the display unit of the slave or from an IrLED command.

When a specific game is purchased or the goal thereof achieved, a specific image can be displayed on a slave. As a result, the game becomes a passport to an event held in the outside world that only the game purchaser or achiever can attend. In other words, the game becomes a passport to an actual event.

The passport is also used in regard to a common currency between games, in which whenever supported software is purchased, points are added and transferred to the slave.

The current points of the common currency can be verified at the position displayed on the display unit of the slave. In regard to the common currency, a bonus service is received in the form of a character that can be used in a game, this service conforming to the number of points. The points of the common currency can expire upon elapse of a fixed time measured by the clock of the slave. The common currency resembles electronic cash, the balance of which is displayed.

Image data, IrLED pattern data, numeric binary data and the like are transferred to the slave, together with an image display and IrLED command-issuance program, as the game ID, event ID and currency ID, etc., at game events such as a game-goal achievement event, purchasing event and temporary event using the master. In accordance with the event, the game ID within the slave, namely the slave ID, an event ID and numeric binary data after a currency check are added on or erased.

An example of generation of a game ID will now be described. In a case where there is no game ID within a slave when a game is started up at the master, encoding is performed to create a game ID using the ID number assigned to the game CD-ROM package, the entered user name or the connected slave ID and code common to the game, and the game ID is registered in the slave. If one has the key to the code, the slave name (user name) and an ID specific to the CD-ROM can be generated from the game ID.

An event ID is generated when a game event is held, and the game ID and event ID in the slave are checked and registered. The currency ID also is generated by a current processing event in a manner similar to that of an event ID, the game ID in the slave and the currency ID are checked and these are registered.

In regard to event processing, a wireless PC which receives an IrLED signal transferred from a slave, or a master having an attached slave, allows admission and permission to play the event game at the site where the event is being held. Confirmation may be made by a display pattern.

From the IrLED signal comprising the game ID transmitted from a slave possessed by a visitor to the event, using the key to the common code, the ID specific to the CD-ROM and the user name, i.e., the slave ID, are extracted, a comparison is made with the event ID transmitted at the same time, and the event, such as admission and playing of the game, is allowed.

Currency and game points are exchanged and transferred between slaves and between a slave and a master by the above-described ID check and collation.

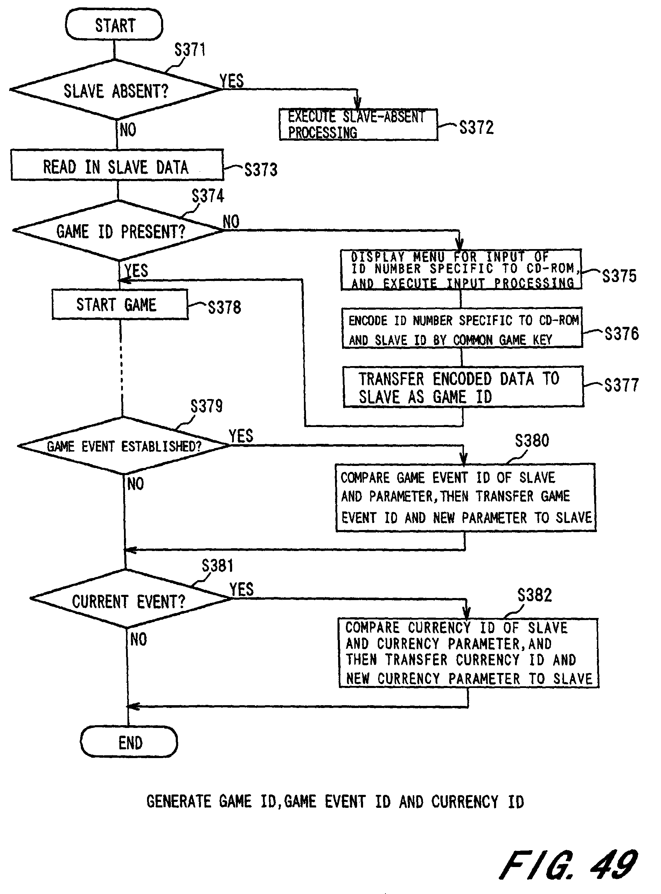

A series of steps for creating a game ID, game-event ID and currency ID will be described with reference to a flowchart shown in Fig. 49.

Processing branches at an initial step S371 depending upon presence or absence of a slave, Specifically, a "YES" decision is rendered and control proceeds to step S372 if a slave is absent, and a "NO" decision is rendered and control proceeds to step S373 if a slave is present.

Prescribed processing in an instance where there is no slave is executed at step S372.

Data is read in from the slave at step S373. Control then proceeds to step S374.

Processing branches at step S374 depending upon presence or absence of a game ID. Specifically, a "YES" decision is rendered and control proceeds to step S378 if a game ID is present, and a "NO" decision is rendered and control proceeds to step S375 if a game ID is absent.

A menu display for entry of an ID number specific to a CD-ROM is presented and input processing is executed at step S375. The ID number specific to the CD-ROM and the slave ID are encoded by a game common key at step S376, the encoded data is transferred to the slave as the game ID at step S377, and control then proceeds to step S378.

The game is started at step S378.

In the ensuing steps, the game proceeds while communication with the slave is carried out. Control then arrives at step S379.

Processing branches at an initial step S379 depending upon whether a game event has been held. Specifically, a "YES" decision is rendered and control proceeds to step S380 if a game event has been held, and a "NO" decision is rendered and control proceeds to step S381 if a game event has not been held.

The event ID of the slave and a parameter are compared at step S380, after which the game event ID and a new parameter are transferred to the slave. Control then proceeds to the next step S381.

An additional step between the master and slave attendant upon progress of the game can be included between steps S379, S380 and step S381.

Processing branches at step S381 depending upon whether a currency event has occurred. Specifically, a "YES" decision is rendered and control proceeds to step S382 if a currency event has occurred, and a "NO" decision is rendered and this series of steps is exited if a current event has not occurred.

The currency ID of the slave and a parameter are compared at step S382, after which the currency ID and a new currency parameter are transferred to the slave. This series of steps is then exited.

In the game described above, a game program that has been loaded in a master transfers specific information to a slave, and the information can be verified from the display unit of the slave. When a specific game is purchased or the goal thereof attained, a specific image can be displayed on the slave. As a result, the game becomes a passport to an actual event that only the game purchaser or game achiever can attend.

In other words, there is provided a passport to an event and a common currency between games by transferring specific information from a master to a slave.

Described next will be a portable video game that employs artificial life, in which characters raised by a game run by the master are transferred successively to a slave, the characters are carried about by the slave and can be communicated and transferred between slaves using an IrLED.

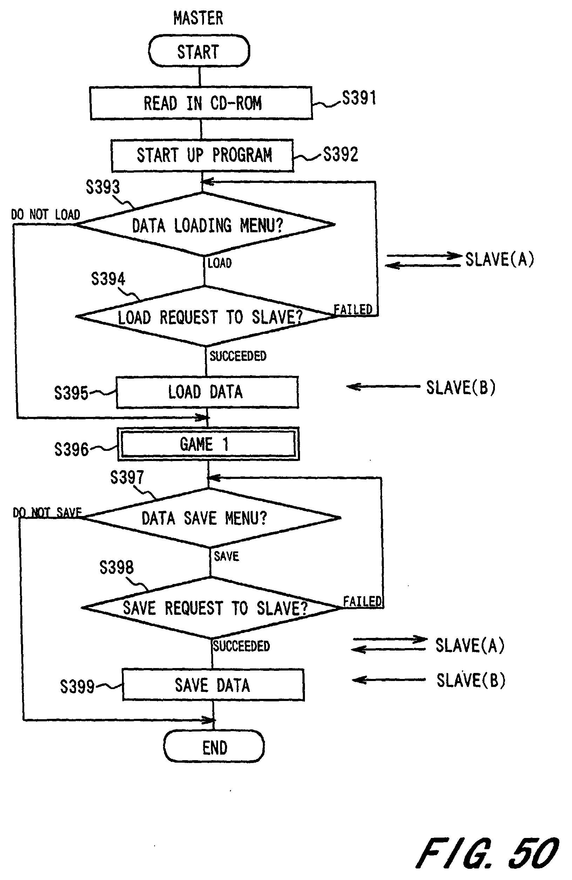

A series of steps regarding a portable video game that employs artificial life will now be described with reference to a flowchart shown in Fig. 50.

A CD-ROM is read at an initial step S391, a program is started up at the next step S392 and processing branches at step S393 in dependence upon a data loading menu.

Specifically, control proceeds to step S394 if data is loaded and to step S396 if data is not loaded.

A load request is sent to slave A at step S394. Control proceeds to step S395 if loading is successful and returns to step S393 if loading fails.

Data is loaded from slave B at step S395.

A game G1 is executed at step S396 and then control proceeds to step S397.

Processing branches at step S397 in dependence upon a data save menu. That is, control proceeds to step S398 if data is to be saved. This series of steps is exited if data is not to be saved.

A save request is sent to slave A at step S398. Control proceeds to step S399 if saving is successful and returns to step S397 if saving fails.

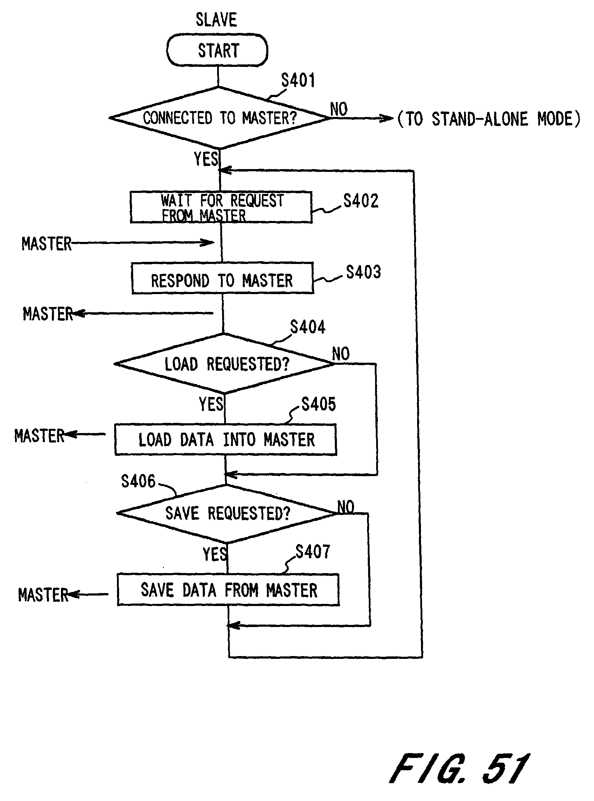

Processing executed on the slave side will be described with reference to a flowchart shown in Fig. 51.

Processing branches at an initial step S401 depending upon whether the slave has been connected to the master. Specifically, a "YES" decision is rendered and control proceeds to step S402 if the slave has been connected to the master, and a "NO" decision is rendered and a transition is made to a stand-alone mode if the slave has not been connected to the master.

The slave waits for contact from the master at step S402. If a contact is received from the master A, the master is contacted at step S403 and control proceeds to step S404.

Processing branches at step S404 depending upon whether there is a load request. Specifically, a "YES" decision is rendered and control proceeds to step S405 if there is a load request, and a "NO" decision is rendered and control proceeds to step S406 if there is no load request.

Data is loaded to the master at step S405 and control then proceeds to step S406.

Processing branches at step S406 depending upon whether there is save request. Specifically, a "YES" decision is rendered and control proceeds to step S407 if there is a save request, and a "NO" decision is rendered and control returns to step S402 if there is no save request.

Data from the master is saved at step S407. Control then returns to step S402.

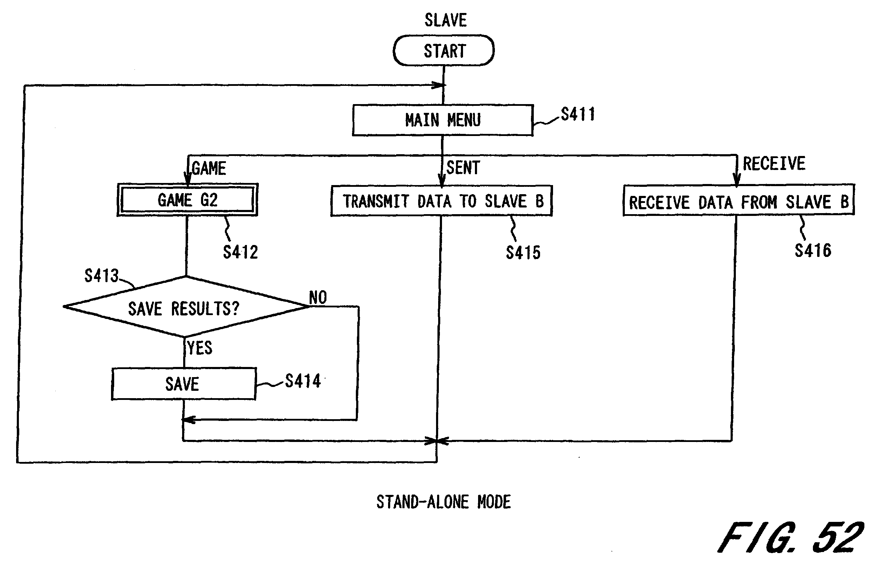

Processing executed on the slave side in the stand-alone mode will be described with reference to a flowchart shown in Fig. 52.

Processing branches at an initial step S411 in dependence upon a main menu. Specifically, control proceeds to step S412 in case of "game", to step S415 in case of "send" and to step S416 in case of "receive".

A game G2 is executed at step S412 and processing branches at step S413 in dependence upon whether the game results are to be saved. Specifically, a "YES" decision is rendered and control proceeds to step S414 is game results are to be saved, and a "NO" decision is rendered and control returns to step S411 if game results are not to be saved.

Gave results are saved at step S414 and then control returns to step S411.

Data is transmitted to slave B at step S415 and then control returns to step S411.

Data is received from slave B at step S416 and then control returns to step S411.

The details of transmission/reception will now be described with reference to a flowchart shown in Fig. 53. First, in regard to transmission on the slave side, a transmission request is sent to slave B at step S421. Control proceeds to step S422 if the transmission request is successful and this series of steps is terminated if the transmission request fails.

This slave sends its own data to slave B at step S422 and then this series of steps is exited.

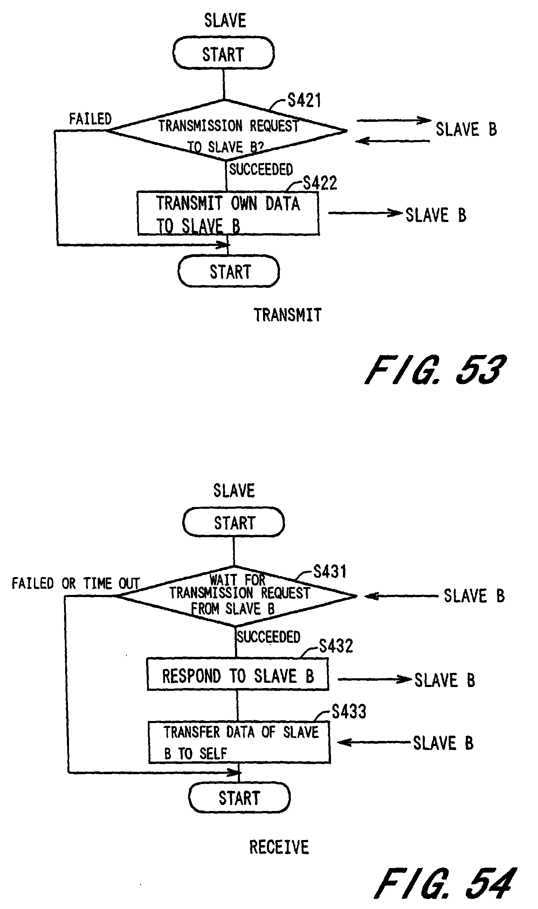

The details of reception at the slave will be described with reference to a flowchart shown in Fig. 54.

The slave waits for a transmission request from slave B at an initial step S431. If a transmission request is received, control proceeds to step S432. If a transmission request is not received, this indicates failure or time-out and, hence, this series of steps is exited. This slave responds to slave B at step S432 and transfers the data of slave B to itself at step S433. This series of steps is then exited.

The game described above is a portable, miniature game machine connected to a game machine for home use, namely a portable video game in which a character used in the game run on the master game machine is transferred to the portable game machine constituting the slave, only the slave is carried about after the transfer and the game character can be transferred between slaves using infrared communication.

An example in which TV program information is distributed by a CD-ROM and this program is used upon being transferred from a master to a slave will be described next.

TV programs are distributed by a CD-ROM or the like, the master reads in the TV program and the user transfers a program desired to be recorded on the screen to a slave. The slave refers to its internal clock, communicates with video equipment by IrLED at the required time and controls the video equipment.

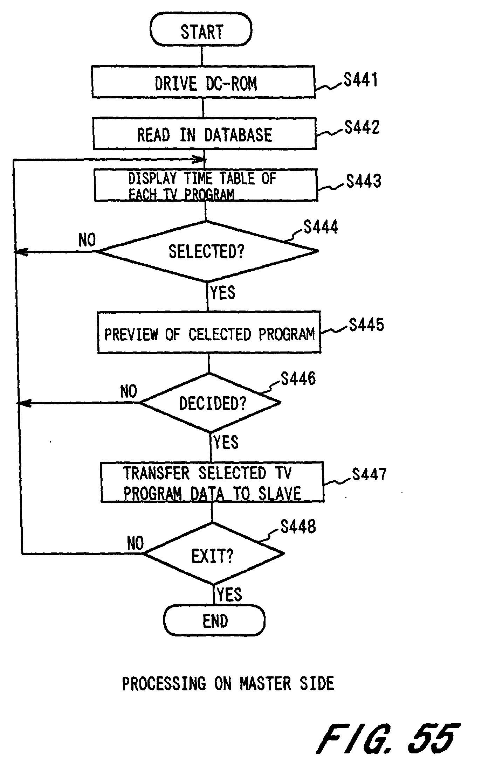

First, a series of steps regarding the master side will be described with reference to a flowchart shown in Fig. 55.

The CD-ROM is driven at an initial step S441, a database is read in at step S442 and the time table of each TV program is displayed at step S443. Control then proceeds to step S444.

Processing branches at step S444 in dependence upon whether a time table displayed at step S443 has been selected. Specifically, a "YES" decision is rendered and control proceeds to step S445 if the time table has been selected, and a "NO" decision is rendered and control returns to step S443 if the time table has not been selected.

A preview of a selected TV program is displayed at step S445 and control then proceeds to step S446.

Processing branches at step S446 depending upon whether a selected TV program has been decided on. Specifically, a "YES" decision is rendered and control proceeds to step S447 if the selected TV program has been decided on, and a "NO" decision is rendered and control returns to step S443 if the selected TV program has not been decided on.

The selected TV program data is transferred to the slave at step S447 and control then proceeds to step S448.

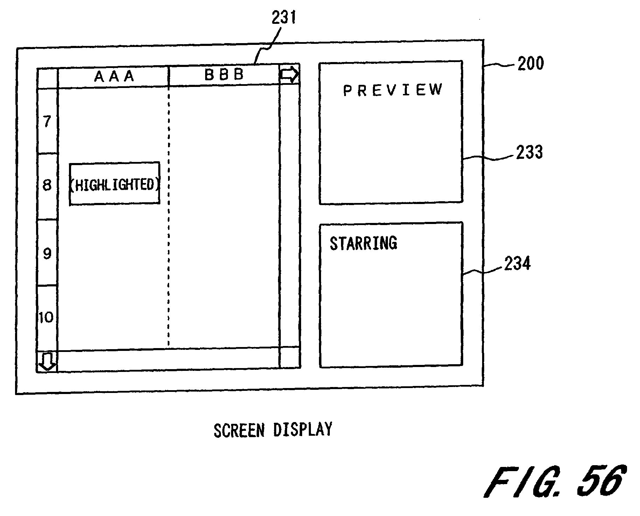

Processing branches at step S448 depending upon whether this series of steps is to be exited. A "YES" decision is rendered and this series of steps is exited if "EXIT" has been selected, and a "NO" decision is rendered and control returns to step S443 if "EXIT" has not been selected. A screen display will now be described with reference to a display screen shown in Fig. 56. The latter illustrates a display screen of a television receiver.

A generally rectangular program display window 231 is open on the left side of a display screen 200, a generally rectangular preview window 233 is open at the upper right of the display screen 200, and a program information window 234 is open at the bottom right of the display screen 200.

Programs in a time sequence per each broadcast station are displayed in the program display window 231. A program displayed in the program display window 231 can be subjected to a prescribed operation such as recording after it is selected. A selected program appears as a highlighted display 232.

A preview image of the selected program is displayed in the preview window 233, and prescribed information regarding the selected program is displayed in the program information window 234.

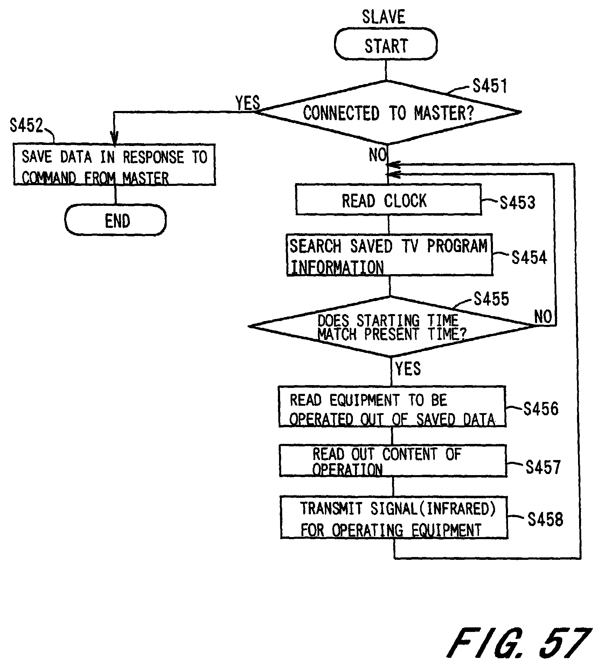

A series of steps regarding processing on the slave side will now be described with reference to a flowchart shown in Fig. 57.

Processing branches at an initial step S451 depending upon whether the slave has been connected to the master. Specifically, a "YES" decision is rendered and control proceeds to step S452 if the slave has been connected to the master, and a "NO" decision is rendered and control proceeds to step S453 if the slave has not been connected to the master.

Data is saved at step S452 in response to a command from the master. This series of steps is then exited.

Time is read out of the clock at step S453 and TV program information that has been saved is searched at step S454. Control then proceeds to step S455.

Processing branches at step S455 depending upon whether starting time matches the present time. Specifically, a "YES" decision is rendered and control proceeds to step S456 if the starting time matches the present time, and a "NO" decision is rendered and control returns to step S453 if the starting time does not the present time.

The equipment that is to be operated is read out of the saved data at step S456, the content of the operation is read out at step S457, and a signal for operating the equipment is transmitted by IrLED of infrared radiation at step S458. Control then returns to step S453.

Thus, as described above, TV program information is distributed by a CD-ROM, the master reads in this information and the user transfers a program desired to be recorded on the screen to a slave. The slave refers to its internal clock, communicates with video equipment by IrLED at the required time and controls the video equipment.

Next, utilization of an actual event using a slave during a game will be described.

Utilization of an actual event during a game entails transferring information to the slave if the game being run on the master requests a certain event.

More specifically, the user pulls out the slave and, in accordance with an image displayed on the display unit of the slave, actually searches for a town outside, e.g., a town in Shibuya. The user enters a keyword, which is obtained at a specific location, into the slave. At the same time, information is entered from the slave of another party, which is an associated party.

Finally, the user takes the slave home, makes a transfer to the master and is capable of proceeding with the game on the master when it has been confirmed that the goals of all events have been attained. This is a game of the type in which the game proceeds while the user experiences a combination of real and artificial worlds.

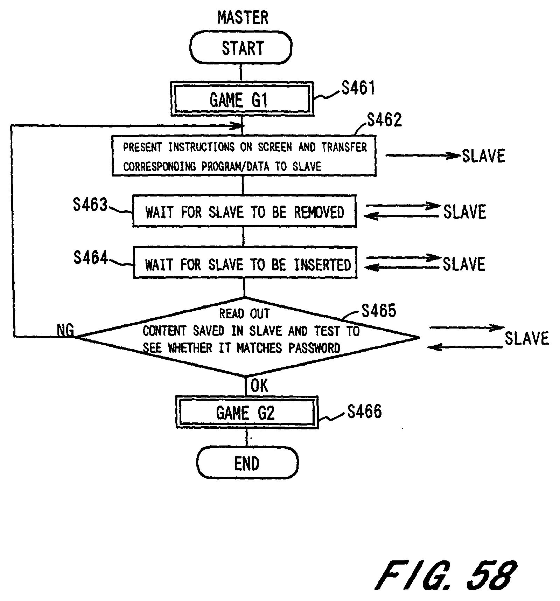

A series of steps executed on the master side will be described with reference to the flowchart shown in Fig. 58.

A game G1 is executed at an initial step S461. Control then proceeds to step S462.

Instructions are presented on a screen and the corresponding program/data is transferred to the slave at step S462, the master waits for the slave to be removed from the master at step S463, the master waits for the slave to be inserted into the master at step S464, the master reads out content that has been saved in the slave and performs a test to see whether the result read out matches a password at step S465.

If the result of the test is a match, an "OK" decision is rendered and control proceeds to step S466. If the result of the test is a non-match, an "NG" decision is rendered and control returns to step S462.

A game G2 is executed at step S466.

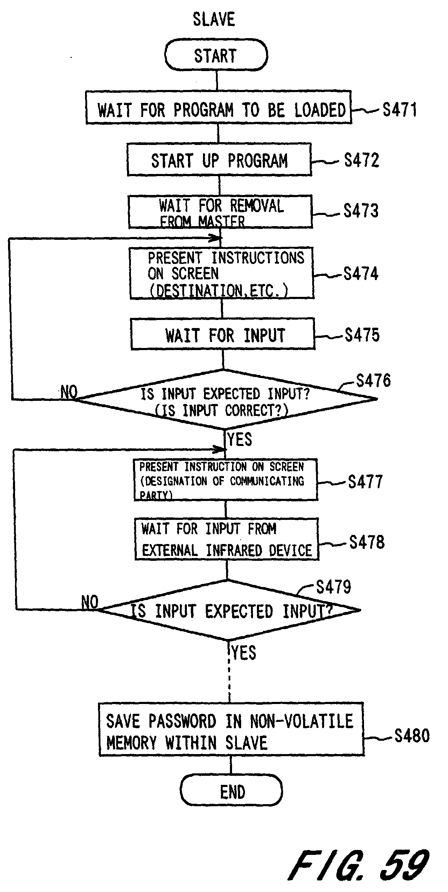

A series of steps executed on the slave side will now be described with reference to a flowchart shown in Fig. 59.

The slave waits for loading of a program at an initial step S471, starts up the loaded program at the next step S472 and waits to be removed from the master at step S473. Control then proceeds to step S474.

Instructions indicative of a destination or the like are displayed on the screen at step S474, the slave waits for an input at step S475, and processing branches at step S476 depending upon whether an input is the one expected.

More specifically, a "YES" decision is rendered and control proceeds to step S477 if the input is the one expected, and a "NO" decision is rendered and control returns to step S474 if the input is not the one expected.

Instructions such as instructions regarding a communicating party are displayed on the screen at step S477, an input from an external infrared device is awaited at step S478, and processing branches at step S479 depending upon whether an input is the one expected.

More specifically, a "YES" decision is rendered and control proceeds to step S480 if the input is the one expected, and a "NO" decision is rendered and control returns to step S477 if the input is not the one expected.

A password is saved in a non-volatile memory within the slave at step S480. This series of steps is then exited.

It should be noted that a plurality of steps exist between step S479 and step S480.

The example described above is a combined so-called roll-playing game (RPG).

More specifically, information is transferred to a slave if a game being run on the master requests a certain event. The user pulls out the slave and, in accordance with an image displayed on the display unit of the slave, actually searches outside for a town in Shibuya, etc. The user enters a keyword, which is obtained at a specific location, into the slave. At the same time, information is entered from the slave of another party, which is an associated party.

Finally, the user takes the slave home, makes a transfer to the master and is capable of proceeding with the game on the master when it has been confirmed that all the goals of all events have been attained. This is a game of the type in which the game proceeds while the user experiences a combination of real and artificial worlds.

## Claims

1. A portable electronic device equipped with an interface for making a connection to a master having a program executing function, characterized by comprising:
program storage means for storing a program;
control means for controlling execution of said program;
display means for displaying information in accordance with the program executed;
operation input means for operating said program; and
power supply means for supplying power to each of said means;
wherein information accompanying execution of a program by the master is transferred and the program that has been stored in said program storage means is executed by said control means on the basis of the information transferred.

2. The portable electronic device according to claim 1, characterized in that the program that has been stored in said program storage means is executed with the portable electronic device disconnected from said master.

3. The portable electronic device according to claim 1, characterized in that the connected master is a video game station, a program is downloaded from the connected master to said storage means, and this program is executed by said control means.

4. The portable electronic device according to claim 1, characterized by further comprising wireless communication means for performing at least one of data transmission and data reception with another device.

5. The portable electronic device according to claim 4, characterized in that information obtained with execution of the program that has been stored in said storage means is transferred to another portable electronic device via said wireless communication means.

6. An entertainment system comprising a master having a program executing function and a slave equipped with an interface for making a connection to the master, characterized in that:
said master has control means for transferring information accompanying execution of said program to said slave and for reading in information from said slave; and
said slave has:
program storage means for storing a program;
control means for controlling execution of said program;
display means for displaying information in accordance with the program executed;
operation input means for operating said program; and
power supply means for supplying power to each of said means.

7. The entertainment system according to claim 6, characterized in that said master is a video game station and a program is downloaded from said master to the storage means of said slave; and
said slave further has wireless communication means for performing at least one of data transmission and data reception with another device, wherein information obtained with execution of the program that has been stored in said program storage means is transferred to another portable electronic device via said wireless communication means.
